# EUROPÄISCHE PATENTSCHRIFT

(11) **EP 3 159 858 B1**
(45) Veröffentlichungstag und Bekanntmachung des Hinweises auf die Patenterteilung: **14.07.2021**
(21) Anmeldenummer: 15190452.1
(22) Anmeldetag: 19.10.2015
(51) Int. Cl.: G07G 1/00, B65G 47/71, G07F 7/06

(54) **AUFNAHMESYSTEM ZUM AUFNEHMEN VON OBJEKTEN**
RECORDING SYSTEM FOR RECORDING OBJECTS
SYSTEME DE RECEPTION D'OBJETS

(43) Veröffentlichungstag der Anmeldung: 26.04.2017
(73) Patentinhaber: Wincor Nixdorf International GmbH, 33106 Paderborn (DE)
(72) Erfinder: SCHÄFER, Oliver, 10369 Berlin (DE); BAITZ, Günter, 13629 Berlin (DE); NEUBERT, Felix, 12557 Berlin (DE)

(56) Entgegenhaltungen:
- WO-A1-90/13873
- WO-A1-97/46329
- DE-A1-102004 046 597
- US-A- 5 256 864
- US-A- 5 313 766
- US-A1- 2012 187 194
- US-A1- 2013 105 272
- US-A1- 2014 129 362

## Beschreibung

Die Erfindung betrifft ein Aufnahmesystem zum Aufnehmen von Objekten nach dem Oberbegriff des Anspruchs 1 sowie ein Verfahren zum Betreiben eines solchen Aufnahmesystems.
Ein solches Aufnahmesystem kann beispielsweise als Packmuldensystem für ein Warencheckout-System ausgebildet sein. Ein solches Aufnahmesystem kann grundsätzlich beispielsweise aber auch als Pfandrücknahmesystem (bezeichnet auch als "Reverse Vending Machine", kurz RVM) ausgebildet sein, bei dem Gebinde in Form von pfandbehafteten Getränkebehältern beispielsweise auf einem Flaschenaufstelltisch in einem Pfandrücknahmebereich gesammelt werden.

Ein derartiges Aufnahmesystem zum Aufnehmen von Objekten umfasst zumindest eine Aufnahmeeinrichtung zum Empfangen von Objekten, eine Fördereinrichtung, die zumindest einen Förderbandabschnitt zum Befördern von Objekten in eine Förderrichtung in die zumindest eine Aufnahmeeinrichtung aufweist, und eine an der zumindest einen Aufnahmeeinrichtung angeordnete Sensoreinrichtung zum Erfassen von Objekten in der zumindest eine Aufnahmeeinrichtung.

Es existieren z.B. Aufnahmeeinrichtungen in Form von Warencheckout-Systemen, bei denen das Erfassen und Registrieren von Waren zum Bezahlen für einen Kunden weitestgehend automatisch ablaufen kann. Ein solches Warencheckout-System, beispielsweise an einer Supermarktkasse, umfasst eine Fördereinrichtung, auf die ein Kunde Waren ablegen kann und die die Waren in den Bereich einer Scaneinrichtung befördert. An der Scaneinrichtung werden die Waren gescannt und beispielsweise anhand von an den Waren angebrachten Identifizierungskennungen wie Barcodes oder dergleichen erfasst und registriert. Nach Passieren der Scaneinrichtung werden die Waren sodann in den Bereich einer Aufnahmeeinrichtung in Form einer Packmulde gefördert, aus der der Kunde die Waren entnehmen und an einer Bezahleinrichtung bezahlen kann.

An einem solchen Aufnahmesystem in Form eines Warencheckout-Systems soll die Bedienung für einen Kunden - nach Möglichkeit ohne Unterstützung durch Bedienpersonal - möglichst einfach gestaltet werden und intuitiv vorgenommen werden können. Hierzu sind bei herkömmlichen Warencheckout-Systemen beispielsweise an Förderbandabschnitten der Fördereinrichtung Sensoren angeordnet, die erfassen, ob beispielsweise Waren auf ein Förderband gelegt werden, sodass abhängig hiervon das Förderband gestartet und die Waren in den Bereich einer Scaneinrichtung befördert werden können.

Hierüber hinaus besteht der Wunsch nach weiterer Automatisierung beispielsweise für solche Systeme, die mehrere Aufnahmeeinrichtungen umfassen und bei denen eine Objekttrenneinrichtung beispielsweise in Form einer verschwenkbaren Weiche zu verstellen ist, um Objekte in die eine oder die andere Aufnahmeeinrichtung zu leiten. Heutzutage erfolgt das Verstellen solcher Weichen meist händisch durch Bedienpersonal, was fehleranfällig sein kann und zusätzliche Bedienschritte erfordert.

Die US 2014/0129362 A1 beschreibt ein Waren-Checkout-System, bei dem an Förderbändern und Sammeleinrichtungen Sensoren zum Detektieren der Präsenz von Waren angeordnet sein können.

Die US 2012/0187194 A1 beschreibt ein Waren-Checkout-System, bei dem mittels eines Terminals Waren automatisch detektiert werden können.

Bei einem aus der US 2013/0105272 A1 bekannten Transportsystem sind beidseits eines Transportbandes Sensoren zum Aussenden von Sensorsignalen entlang paralleler Signalpfade angeordnet.

Bei einem aus der US 5,256,864 bekannten, automatisierten Verkaufssystem ist ein Scansystem zum Erfassen von Waren vorgesehen.

Die WO 90/13873 A1 beschreibt eine Anordnung zum Behandeln von Waren, an denen Preisschilder angebracht sind.

Die DE 10 2004 046 597 A1 beschreibt einen selbstbedienten Warenerfassungsplatz mit einer Abtasteinrichtung für strichcodierte Etiketten, der unter anderem Ablagen aufweist.

Die WO 97/46329 A1 beschreibt ein System zum Inspizieren von Behältern.

Aus der US 5,313,766 ist ein System zum Herstellen von Tüten bekannt.

Aufgabe der vorliegenden Erfindung ist es, ein Aufnahmesystem zum Aufnehmen von Objekten sowie ein Verfahren zum Betreiben eines solchen Aufnahmesystems zur Verfügung zu stellen, die eine weitere Automatisierung insbesondere bei der Förderung von Objekten in eine Aufnahmeeinrichtung ermöglichen.

Diese Aufgabe wird durch einen Gegenstand mit den Merkmalen des Anspruchs 1 gelöst.

Demnach ist die Sensoreinrichtung ausgebildet, Sensorsignale entlang unterschiedlicher Signalpfade über die Aufnahmeeinrichtung zu senden, um anhand einer Interaktion zumindest eines der Sensorsignale mit in die Aufnahmeeinrichtung geförderten Objekte auf einen Füllstand der Aufnahmeeinrichtung zu schließen.

Die vorliegende Erfindung geht von dem Gedanken aus, mittels einer Sensoreinrichtung den Füllstand an einer Aufnahmeeinrichtung zu messen. Diesem liegt der Gedanke zugrunde, dass über den Füllstand Informationen gewonnen werden können, die zum Steuern eines Aufnahmesystems verwendet werden können, beispielsweise um anhand des Füllstandes die Fördergeschwindigkeit von Förderbandabschnitten der Fördereinrichtung zu steuern oder eine Weiche zum Leiten von Objekten in unterschiedliche Aufnahmeeinrichtungen zu verstellen.

Um den Füllstand an einer Aufnahmeeinrichtung zu bestimmen, ist vorgesehen, dass die Sensoreinrichtung Sensorsignale entlang unterschiedlicher Signalpfade über die Aufnahmeeinrichtung sendet. Die Sensoreinrichtung überspannt die Aufnahmeeinrichtung somit zumindest abschnittsweise mit einem Netz von Sensorsignalen, die mit in der Aufnahmeeinrichtung befindlichen Objekten interagieren, indem beispielsweise Signalpfade unterbrochen und/oder Sensorsignale reflektiert oder abgelenkt werden. Anhand unterbrochener Signalpfade oder anhand von reflektierten Signalen kann sodann ein Rückschluss darauf gezogen werden, bis zu welchem Grad die Aufnahmeeinrichtung gefüllt ist, sodass zumindest ein (grober) Schätzwert für den Füllstand der Aufnahmeeinrichtung ermittelt werden kann.

Die Sensorsignale stellen beispielsweise Signale infraroten Lichts dar. Die Sensoreinrichtung sendet somit beispielsweise mittels Infrarot-LED infrarotes Licht entlang von unterschiedlichen Signalpfaden aus und empfängt das infrarote Licht beispielsweise an unterschiedlichen, beispielsweise durch im Infraroten sensitive Photodioden ausgebildeten Empfängern, sodass anhand des empfangenen Signals erfasst werden kann, ob sich Objekte im Signalpfad des infraroten Lichts befinden oder nicht.

In diesem Zusammenhang ist darauf hinzuweisen, dass die Sensoreinrichtung grundsätzlich auch andere Arten von Sensoren, beispielsweise Ultraschallsensoren, kapazitive Sensoren, induktive Sensoren, Drucksensoren, Kameras oder dergleichen, verwenden kann und insofern nicht auf Sensoren zum Senden und/oder Empfangen von infrarotem Licht beschränkt ist.

Die Sensoreinrichtung weist eine Vielzahl von Sensoreinheiten auf, die verteilt um die Aufnahmeeinrichtung angeordnet sind.

In einer ersten Variante kann hierbei beispielsweise ein Sensor vorgesehen sein, der Sensorsignale aussendet. Die Sensorsignale werden über eine Mehrzahl von um die Aufnahmeeinrichtung herum verteilt angeordneten Empfängern empfangen, wobei der Sender gleichartige Sensorsignale aussenden kann, sodass jeder Empfänger das gleiche Sensorsignal empfängt, oder der Sender auch individuelle, jeweils einem Empfänger eindeutig zugeordnete Sensorsignale aussenden kann, sodass jeder Empfänger ein individuelles, ihm eindeutig zugeordnetes Sensorsignal empfängt.

In einer zweiten Variante können auch eine Vielzahl von Sendern zum Aussenden von Sensorsignalen vorgesehen sein, wobei diese Sensorsignale von einem gemeinsamen Empfänger empfangen werden. In diesem Fall können sich die von den unterschiedlichen Sendern ausgesendeten Sensorsignale voneinander unterscheiden, damit der Empfänger die Sensorsignale der unterschiedlichen Sender unterscheiden und jeweils eindeutig einem zugeordneten Sender zuweisen kann. In einer anderen Variante ist es auch möglich, dass die einzelnen Sender in zeitlich gestaffelter Weise, beispielsweise in kurzen Zyklen, sequentiell senden, so dass der Empfänger zu einem bestimmten Zeitpunkt immer nur ein Signal von einem einzelnen Sender empfängt.

Denkbar und möglich ist hierbei auch eine Kombination der ersten und der zweiten Variante. So können eine Vielzahl von Sendern und eine Vielzahl von Empfängern vorgesehen sein, wobei jeder Sender eine Mehrzahl von Sensorsignalen aussendet, die von einer Mehrzahl von Empfängern empfangen werden, sodass ein Sender Sensorsignale an mehrere Empfänger sendet und ein Empfänger Sensorsignale von mehreren Sendern empfängt.

Dadurch, dass Sender und Empfänger um die Aufnahmeeinrichtung herum verteilt werden, wird die Aufnahmeeinrichtung mit einem Netz von Signalpfaden überspannt. In einem Zustand, in dem die Aufnahmeeinrichtung leer ist, können sich die Sensorsignale ungehindert zwischen den Sendern und den Empfängern ausbreiten und werden an den Empfängern empfangen. Befinden sich jedoch Objekte in der Aufnahmeeinrichtung, so werden zumindest einige der Signalpfade unterbrochen oder (deutlich) gedämpft (beispielsweise an Kanten oder an transparenten Objekten) oder unter Umständen sogar verstärkt (durch Bündelung des Lichtsignals beispielsweise an transparenten Objekten aufgrund eines Linseneffekts z.B. an gekrümmten Flächen), sodass nicht mehr alle Sensorsignale an allen Empfängern empfangen werden oder zumindest eine Abweichung in der empfangenen Signalstärke von einer erwarteten Signalstärke auftritt, was entsprechend zur Bestimmung des Füllstandes ausgewertet werden kann.

Eine Aufnahmeeinrichtung ist, in einer konkreten Ausgestaltung, durch Wandungsabschnitte eingefasst, die beispielsweise kastenförmig zueinander zur Ausbildung einer rechteckigen Aufnahmeeinrichtung angeordnet sind. An diesen Wandungsabschnitten sind Sensoreinheiten der Sensoreinrichtung räumlich versetzt angeordnet, sodass zwischen den unterschiedlichen Sensoreinheiten unterschiedliche Signalpfade gebildet werden, entlang derer Sensorsignale übertragen werden.

In einem konkreten Ausführungsbeispiel kann eine einen Sender ausbildende, erste Sensoreinheit an einem ersten Wandungsabschnitt der zumindest einen Aufnahmeeinrichtung und eine einen Empfänger ausbildende, zweite Sensoreinheit derart an einem dem ersten Wandungsabschnitt gegenüberliegenden, zweiten Wandungsabschnitt angeordnet sein, dass die zweite Sensoreinheit der ersten Sensoreinheit gegenüberliegt. Die erste Sensoreinheit sendet somit ein Sensorsignal vom ersten Wandungsabschnitt in Richtung der zweiten Sensoreinheit am gegenüberliegenden, zweiten Wandungsabschnitt. Wird das Sensorsignal an der zweiten Sensoreinheit empfangen, heißt dies, dass keine Ware sich zwischen der ersten Sensoreinheit und der zweiten Sensoreinheit in der Aufnahmeeinrichtung befindet. Ist der Signalpfad hingegen durch eine Ware unterbrochen und wird entsprechend kein Sensorsignal an der zweiten Sensoreinheit empfangen, so kann darauf geschlossen werden, dass die Aufnahmeeinrichtung (zumindest) bis zum Signalpfad zwischen der ersten Sensoreinheit und der zweiten Sensoreinheit gefüllt ist.

Die gegenüberliegende Anordnung von Sensoreinheiten entspricht einer Anordnung ähnlich einer Lichtschranke. Denkbar und möglich ist hierbei, dass beide Sensoreinheiten sowohl Sensorsignale senden als auch Sensorsignale empfangen, sodass Signale von der ersten Sensoreinheit hin zu der zweiten Sensoreinheit und auch umgekehrt Signale von der zweiten Sensoreinheit hin zu der ersten Sensoreinheit gesendet werden.

Grundsätzlich können Signalpfade sich in direkter optischer Verbindung zwischen einem Sender und einem Empfänger erstrecken. Denkbar und möglich ist hierbei jedoch auch, dass ein Signalpfad sich über einen Reflektionspunkt (oder mehrere Reflektionspunkte) ausbildet, indem ein Sensorsignal von einem Sender ausgesendet, an einem Reflexionspunkt reflektiert und erst dann von einem Empfänger empfangen wird.

Denkbar und möglich ist zudem, dass eine Sensoreinheit als Reflektionssensor zum Aussenden eines Sensorsignals und zum Empfangen eines reflektierten Signals ausgebildet ist. Dem Sender ist somit kein separater, räumlich getrennter Empfänger zugeordnet, sondern die Sensoreinheit ist dazu ausgestaltet, Sensorsignale auszusenden und eventuell reflektierte Signalanteile zu detektieren. Mittels solcher Reflektionssensoren kann nicht nur (nach Art einer Lichtschranke) ermittelt werden, ob ein Signalpfad unterbrochen ist, sondern die reflektierten Signale an sich können beispielsweise hinsichtlich ihrer Signalstärke untersucht werden, um beispielsweise auf den Abstand eines Objekts, an dem das Sensorsignal reflektiert worden ist, zu schließen. Beispielsweise können bei einem solchen Reflektionssensor reflektierte Signale einem Nahbereich und einem Fernbereich des Sensors zugeordnet werden. So kann der Signalpegel eines empfangenen reflektierten Signals mit unterschiedlichen Schwellwerten verglichen werden, um anhand dieses Schwellwertvergleichs zu bestimmen, ob sich ein Objekt, an dem das Sensorsignal reflektiert worden ist, im Nahbereich oder im Fernbereich des Sensors befindet. Übersteigt der Signalpegel des empfangenen reflektierten Signals beispielsweise einen dem Nahbereich des Sensors zugeordneten ersten Schwellwert, so kann daraus geschlossen werden, dass sich das reflektierende Objekt im Nahbereich des Sensors befindet. Liegt der Signalpegel des reflektierten Signals hingegen zwischen dem ersten Schwellwert und einem zweiten, kleineren Schwellwert, so kann hieraus geschlossen werden, dass sich das reflektierende Objekt in einem Fernbereich des Sensors befindet. Ist das reflektierte Signal schwächer als der zweite Schwellwert, so kann davon ausgegangen werden, dass es sich um keine an einem Objekt reflektierten Signale, sondern um Störsignale oder dergleichen handelt.

Für die Messung und Auswertung von Reflexionssignalen können vorteilhafterweise Sensoren in Form von Ultraschallsensoren verwendet werden, bei denen unterschiedliche Reflexionseigenschaften von Objekten nur eine untergeordnete Rolle spielen. Denkbar und möglich ist die Messung und Auswertung von solchen Reflexionssignalen aber grundsätzlich auch mit anderen Sensoren.

Eine solche Reflexionsmessung kann zudem beispielsweise bei einem Aufnahmesystem im Rahmen eines Pfandrücknahmesystems verwendet werden, bei dem an einer Aufnahmeeinrichtung beispielsweise ermittelt werden soll, inwieweit die Aufnahmeeinrichtung mit Gebinden in Form von Flaschen oder Dosen gefüllt ist. Flaschen beispielsweise haben zumindest näherungsweise ähnliche Reflexionseigenschaften, sodass anhand der Stärke unterschiedlicher Reflexionssignale auf den Abstand zu einem Sensor geschlossen werden kann (zumindest kann eine Zuordnung zu einem Nah- oder Fernbereich erfolgen).

Denkbar und möglich ist in einer Ausgestaltung, dass das Aufnahmesystem zumindest eine Sensoreinheit aufweist, die als Reflektionssensor zum Aussenden eines Sensorsignals und zum Empfangen eines reflektierten Signals und zudem zum Empfangen eines ausgesendeten Signals einer anderen Sensoreinrichtung ausgebildet ist. Die Sensoreinheit ist somit zum einen ein Reflektionssensor, dient zum anderen aber auch als empfangende Sensoreinheit beispielsweise im Rahmen einer Einweglichtschranke, bei der ein Signal von einer Sensoreinheit ausgesendet und von einer anderen Sensoreinheit empfangen wird. Auf diese Weise kann zum einen im Rahmen einer Lichtschrankenfunktion erkannt werden, ob überhaupt ein Objekt auf einer Strecke zwischen einer sendenden Sensoreinheit und einer empfangenden Sensoreinheit angeordnet ist. Zudem kann durch den Reflektionssensor auch eine Abstandsinformation gewonnen werden, sodass bestimmt werden kann, an welchem Ort (ungefähr) sich das Objekt auf dieser Strecke befindet.

Das Aufnahmesystem umfasst vorzugsweise eine Steuereinrichtung, die mit den unterschiedlichen Sensoreinheiten der Sensoreinrichtung verbunden ist und den Betrieb der Sensoreinheiten steuert. So steuert die Auswerteeinrichtung die Sensoreinheiten der Sensoreinrichtung zum Aussenden von Sensorsignalen an und erhält von den Sensoreinheiten Sensordaten, die anhand von empfangenen (oder nicht empfangenen Sensorsignalen) erhalten worden sind. Anhand dieser Sensordaten kann die Steuereinrichtung sodann eine Auswertung vornehmen, um auf den Füllstand der Aufnahmeeinrichtung zu schließen.

Ist beispielsweise ein Signalpfad zwischen einem Sender und einem Empfänger durch ein auf der Aufnahmeeinrichtung befindliches Objekt unterbrochen und wird dementsprechend, wenn der Sender ein Sensorsignal aussendet, kein Sensorsignal an dem zugeordneten Empfänger empfangen, so kann dies entsprechend ausgewertet werden. Weil die Positionen der Sensoreinheiten an der Aufnahmeeinrichtung bekannt sind und somit auch die Signalpfade zwischen den unterschiedlichen Sendern und Empfängern bekannt sind, kann aus der Unterbrechung eines oder mehrerer Signalpfade oder aus dem Empfangen von reflektierten Signalen aus unterschiedlichen Bereichen der Aufnahmeeinrichtung auf den Füllstand geschlossen werden, sodass zumindest ein Schätzwert für den Füllstand angegeben werden kann.

Beispielsweise kann durch geeignete Sensorverteilung ermittelt werden, ob die Aufnahmeeinrichtung leer ist, zu 25 % gefüllt ist, zu 50 % gefüllt ist, zu 75 % gefüllt ist oder voll (100 % gefüllt) ist. Anhand der Signalpfade werden somit Füllstandsbereiche der Aufnahmeeinrichtung unterschieden, sodass ein sukzessives Füllen der Aufnahmeeinrichtung mit Objekten überwacht werden kann.

Anhand des Füllstandes kann eine Steuerung des Aufnahmesystems vorgenommen werden. So können abhängig vom Füllstand die Fördergeschwindigkeiten eines oder mehrerer Förderbandabschnitte der Fördereinrichtung angepasst werden. Wird dabei festgestellt, dass eine Aufnahmeeinrichtung nahezu voll ist, so kann die Fördergeschwindigkeit eines Förderbandabschnitts, der Objekte in die Aufnahmeeinrichtung befördert, reduziert werden, um die Geschwindigkeit, mit der Objekte in die Aufnahmeeinrichtung geleitet werden, zu verringern. Ebenso ist denkbar, einen anderen Förderbandabschnitt anzufahren, um das Leiten von Objekten hin zu einer anderen Aufnahmeeinrichtung zu ermöglichen.

Ebenso ist denkbar, dass in Abhängigkeit vom Füllstand eine Objekttrenneinrichtung in Form einer Weiche an der Aufnahmeeinrichtung gesteuert wird. So kann die Steuereinrichtung ausgebildet sein, in Abhängigkeit von einem ermittelten Füllstand eine Antriebseinrichtung zum Verstellen der Objekttrenneinrichtung anzusteuern, wenn beispielsweise erkannt wird, dass die Aufnahmeeinrichtung nahezu voll ist und somit Objekte in eine andere Aufnahmeeinrichtung geleitet werden sollen. Die Objekttrenneinrichtung in Form der Weiche kann beispielsweise verschwenkbar an der Aufnahmeeinrichtung angeordnet sein. Wird erkannt, dass die Aufnahmeeinrichtung voll oder zumindest nahezu voll ist, so wird die Objekttrenneinrichtung verschwenkt und damit der Förderweg hin zur Aufnahmeeinrichtung versperrt, um Objekte entlang der Objekttrenneinrichtung hin zu einer anderen Aufnahmeeinrichtung zu leiten.

Zudem kann die Steuereinrichtung ausgebildet sein, einem Nutzer Informationen über den Füllstand an einer Aufnahmeeinrichtung auszugeben. So kann der Nutzer beispielsweise darüber informiert werden, ob eine Aufnahmeeinrichtung vollständig gefüllt, nahezu gefüllt oder leer ist. Zusätzlich oder alternativ kann über die Steuereinrichtung ausgegeben werden, ob eine Aufnahmeeinrichtung, beispielsweise eine Packmulde bei einem Packmuldensystem, durch einen Kunden belegt oder frei ist.

Zudem ist möglich, mittels der Steuereinrichtung eine Aufnahmeeinrichtung automatisch auszuwählen. So kann die Steuereinrichtung, beispielsweise bei einem Packmuldensystem, bei dem mehrere Packmulden, beispielsweise mehr als zwei Packmulden, vorhanden sind, automatisch eine neue Packmulde auswählen, wenn eine vorher benutzte Packmulde gefüllt und somit nicht mehr zur Aufnahme weiterer Objekte bereit ist.

Denkbar ist auch ein Szenario zur Bereitstellung einer intelligenten Aufnahmeeinrichtung, beispielsweise einer intelligenten Packmulde, bei der mittels einer geeigneten Fördereinrichtung Objekte gezielt zu einem Ort geführt werden, an dem ein Nutzer Objekte aus der Aufnahmeeinrichtung entnimmt. Ein solcher Ort kann beispielsweise durch die Sensoren erfasst werden, weil sich an diesem Ort ein Freibereich in der Aufnahmeeinrichtung ergibt, der sensorisch erfasst werden kann. Ist dies der Fall, können eine oder mehrere Fördereinrichtung an der Aufnahmeeinrichtung in gezielter Weise angesteuert werden, um Objekte hin zu diesem freien Bereich nachzuführen. Dies ist insbesondere vorteilhaft bei einem Packmuldensystem einsetzbar, bei dem ein Nutzer Waren aus einer Packmulde entnimmt.

Bei einem Aufnahmesystem für ein Pfandrücknahmesystem ist beispielsweise denkbar und möglich, dynamische Sortier-Teilbereiche in Abhängigkeit vom Füllstand anzupassen, also zu verbreitern oder schmaler zu machen. Gegebenenfalls kann auch eine Aussage über in einem Sortier-Bereich befindliche Gebinde einer Flaschensorte gemacht werden, sodass Nutzer vorab darüber informiert werden, wie viele Flaschen in einem bestimmten Sortierbereich vorrätig sind, sodass beispielsweise Getränkekästen in geeigneter Anzahl bereitgestellt werden können.

In einer vorteilhaften Ausgestaltung weisen die Sensoreinheiten der Sensoreinrichtung jeweils eine Anzeigeeinrichtung, beispielsweise in Form einer oder mehrerer LEDs, zum Ausgeben visueller Anzeigesignale in Abhängigkeit von einem Füllstand der Aufnahmeeinrichtung auf. Ist eine Aufnahmeeinrichtung bereit zum Empfangen von Objekten, so können die Sensoreinheiten der Sensoreinrichtung an der Aufnahmeeinrichtung beispielsweise grün aufleuchten, um die Bereitschaft der Aufnahmeeinrichtung zu signalisieren. Hat der Füllstand der Aufnahmeeinrichtung einen vorbestimmten Schwellwert überschritten, so kann die Anzeigeeinrichtung ihre Farbe von grün zu orange ändern, sodass einem Nutzer und auch dem Bedienpersonal signalisiert wird, dass die Aufnahmeeinrichtung sich ihrem gefüllten Zustand nähert. Wird auf eine andere Aufnahmeeinrichtung durch Verstellen der Objekttrenneinrichtung umgeschaltet, so können die Anzeigeeinrichtungen der Sensoreinheiten ihre Farbe hin zu Rot ändern, um anzuzeigen, dass die Aufnahmeeinrichtung nicht bereit zum Empfangen von Objekten ist.

In einer weiteren vorteilhaften Ausgestaltung kann vorgesehen sein, dass sich Sensoreinheiten der Sensoreinrichtung gegenseitig identifizieren. Hierzu können zwischen den Sensoreinheiten beispielsweise in zeitlich gestaffelter Weise Signale ausgetauscht werden, durch die die Sensoreinheiten gegenseitig erkennen können, ob und in welcher Anzahl sowie an welchem Ort andere Sensoreinheiten vorhanden sind. Beispielsweise kann eine als Sender ausgebildete Sensoreinheit ein Sensorsignal aussenden, das eine den Sender identifizierende Identifizierungskennung, beispielsweise in Form einer digitaler Bitfolge oder dergleichen, enthält und als Testsignal dient. Das Sensorsignal kann von einem Empfänger empfangen werden, sodass der Sender an dem Empfänger identifiziert und erkannt werden kann, dass ein Austausch von Sensorsignalen zwischen dem Sender und dem Empfänger in korrekter Weise möglich ist.

Bei einem identifizierenden Signal kann es sich beispielsweise um eine einfache Bitfolge, beispielsweise umfassend fünf Pulse mit unterschiedlichen High- oder Low-Werten (1 und 0), handeln. Bei einem identifizierenden Signal kann es sich beispielsweise aber auch um eine Adresskennung, beispielsweise die Mac-Adresse oder eine dynamisch vergebene ID handeln.

Solche identifizierenden Sensorsignale können hierbei zwischen sämtlichen Sendern und Empfängern ausgetauscht werden, sodass die Sensoreinheiten über die Signale jeweils beispielsweise Informationen über die Entfernung und Sichtbarkeit (gegebenenfalls auch über Reflexionspunkte) anderer Sensoreinheiten erhalten. Hierbei kann jedem Sender eine eindeutige Identifizierungskennung zugeordnet sein, die im Rahmen der ausgetauschten Sensorsignale übertragen wird, sodass ein Sender sich gegenüber einem Empfänger eindeutig identifizieren kann. Zwingend ist dies jedoch nicht.

Eine solche Erkennung der Sensoreinheiten untereinander kann gegebenenfalls auch in indirekter Weise erfolgen, sodass beispielsweise eine erste Sensoreinheit eine andere, zweite Sensoreinheiten über eine zwischengeordnete, dritte Sensoreinheit erkennt, die in vermittelnder Weise Signale zwischen der ersten und der zweiten Sensoreinheit überträgt.

Eine solche gegenseitige Identifizierung kann in einem Kalibrierungsdurchlauf vor dem eigentlichen Betrieb durchgeführt werden, um das System einzulernen. Zusätzlich kann aber auch vorgesehen sein, dass im Betrieb stets wiederkehrend Identifizierungskennungen zwischen den unterschiedlichen Sendern und Empfängern ausgetauscht werden, sodass in wiederkehrender Weise die Betriebsbereitschaft des Systems geprüft werden kann.

Dieses Vorgehen macht auch das Erkennen von Verschmutzungen oder Manipulationsversuchen an dem System möglich. So kann die Sensoreinrichtung ausgebildet sein, ein an einem Empfänger empfangenes Testsignal auszuwerten und den Signalpegel dieses Testsignals mit einem gespeicherten Referenzwert zu vergleichen. Anhand des Vergleichs kann dann auf eine Veränderung an der Sensoreinrichtung geschlossen werden. Ist der Empfänger beispielsweise verschmutzt und ist der Signalpegel des empfangenen Testsignals dadurch geringer, so kann dies entsprechend erkannt werden. Ebenso wird sich der Signalpegel des Testsignals verändern (vergrößern oder verringern), wenn die Position des Empfängers relativ zum Sender verändert wird, was ebenfalls anhand des Vergleichs mit dem Referenzwert entsprechend erkannt werden kann.

Ein Verschmutzungsgrad kann beispielsweise anhand unterschiedlicher Schwellwertstufen erkannt werden. Durch eine zyklische Abfrage im laufenden Betrieb kann hierbei eine nach und nach eintretende Verschmutzung angelernt werden und somit berücksichtigt werden oder eine Nachregelung auslösen. Hiervon kann unterschieden werden, ob eine Manipulation an einer Sensoreinheit stattfindet, weil in diesem Fall eine plötzliche Änderung beispielsweise in der Signalstärke oder der Signallaufzeit (z.B. bei Ultraschallsignale) auftritt.

Eine Reinigung von Sensoren kann beispielsweise durch Starten eines Reinigungsprogramms in einem System-Menü ausgeführt werden.

Der Referenzwert kann hierbei beispielsweise initial durch Kalibrierung vor Inbetriebnahme anhand des empfangenen Signalpegels im Ausgangszustand bestimmt werden. Ergeben sich im späteren Betrieb Abweichungen von diesem Referenzsignalpegel, deutet dies auf eine Veränderung am System hin.

In einer Ausgestaltung weist ein Warencheckout-System ein Aufnahmesystem nach der vorangehend beschriebenen Art auf. Bei einem solchen Warencheckout-System kann das Aufnahmesystem beispielsweise durch ein Packmuldensystem mit einer oder mehreren Packmulden ausgestaltet sein. Das Aufnahmesystem kann in diesem Fall beispielsweise eine Scaneinrichtung zum (automatischen) Scannen und Registrieren von Objekten enthalten. Mittels der Fördereinrichtung werden Objekte an der Scaneinrichtung vorbeigeführt, dort registriert und hin zu einer Aufnahmeeinrichtung in Form einer oder mehrerer Packmulden des Aufnahmesystems geleitet.

Denkbar und möglich ist aber auch, dass das Aufnahmesystem Bestandteil eines Pfandrücknahmesystems ist, bei dem ein Nutzer ein Pfandobjekt eingibt und das Aufnahmesystem dazu dient, eingegebene Pfandobjekte zu sammeln.

Die Aufgabe wird auch durch ein Verfahren zum Betreiben eines Aufnahmesystems für ein Aufnahmesystem gelöst. Bei dem Verfahren empfängt zumindest eine Aufnahmeeinrichtung Objekte, indem eine Fördereinrichtung mit zumindest einem Förderbandabschnitt Objekte in eine Förderrichtung in die zumindest eine Aufnahmeeinrichtung befördert. Eine an der zumindest einen Aufnahmeeinrichtung angeordnete Sensoreinrichtung erfasst Objekte in der zumindest einen Aufnahmeeinrichtung. Hierbei ist vorgesehen, dass die Sensoreinrichtung Sensorsignale entlang unterschiedlicher Signalpfade über die Aufnahmeeinrichtung sendet, um anhand einer Interaktion zumindest eines der Sensorsignale mit in die Aufnahmeeinrichtung geförderten Objekten auf einen Füllstand der Aufnahmeeinrichtung zu schließen.

Vorteile und vorteilhafte Ausgestaltungen, wie sie vorangehend für das Aufnahmesystem beschrieben worden sind, finden in analoger Weise auch für das Verfahren Anwendung, sodass auf das oben Ausgeführte verwiesen werden soll.

Der der Erfindung zugrunde liegende Gedanke soll nachfolgend anhand der in den Figuren dargestellten Ausführungsbeispiele näher erläutert werden. Es zeigen:
- Fig. 1: eine Draufsicht auf ein Ausführungsbeispiel eines Warencheckout-Systems;
- Fig. 2: eine schematische Ansicht einer Packmulde mit einer daran angeordneten Sensoreinrichtung;
- Fig. 3: eine schematische Ansicht eines anderen Ausführungsbeispiels einer Packmulde mit einer daran angeordneten Sensoreinrichtung;
- Fig. 4A-4E: Ansichten eines Ausführungsbeispiels eines Packmuldensystems, beim Befüllen einer Packmulde;
- Fig. 5A-5D: Ansichten eines anderen Ausführungsbeispiels eines Packmuldensystems, beim Befüllen einer Packmulde;
- Fig. 6: ein schematisches Ablaufdiagramm zum Einlernen einer Sensoreinrichtung des Packmuldensystems;
- Fig. 7: eine schematische Ansicht eines Packmuldensystems mit einer daran angeordneten Sensoreinrichtung;
- Fig. 8A-8C: eine schematische Ansicht von Sensoreinheiten einer Sensoreinrichtung in unterschiedlichen räumlichen Lagebeziehungen;
- Fig. 9: eine schematische Ansicht einer Anordnung von Sensoreinheiten einer Sensoreinrichtung an einer Packmulde;
- Fig. 10: eine schematische Ansicht eines anderen Ausführungsbeispiels einer Sensoreinrichtung an einer Packmulde;
- Fig. 11: eine schematische Ansicht einer Steuereinrichtung zum Steuern der Sensoreinheiten; und
- Fig. 12: eine schematische Ansicht eines Ausführungsbeispiels der Verschaltung der Sensoreinheiten.

Nachfolgend wird ein Aufnahmesystem anhand von Ausführungsbeispielen eines Packmuldensystems bei einem Warencheckout-System beschrieben. Dies ist jedoch nur beispielhaft zu verstehen. Grundsätzlich kann ein Aufnahmesystem der hier beschriebenen Art auch bei anderen Systemen, beispielsweise bei Pfandrücknahmesystemen oder Überwachungssystemen, bei denen ein Füllstand an einer (flächigen) Aufnahmeeinrichtung zum Aufnehmen von Objekten überwacht werden soll, zum Einsatz kommen.

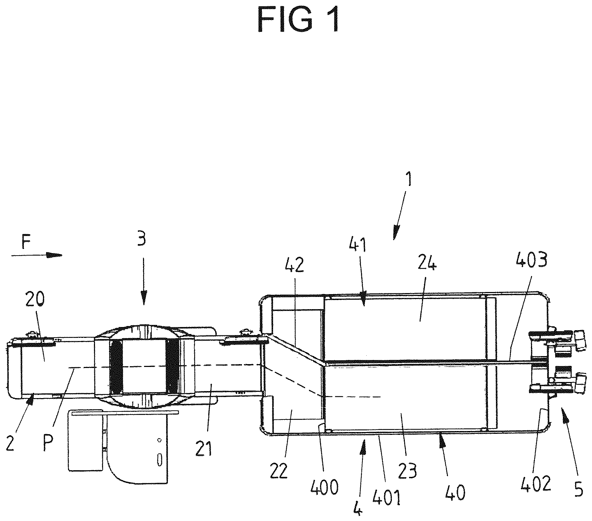

Fig. 1 zeigt in einer schematischen Draufsicht ein Ausführungsbeispiel eines Warencheckout-Systems 1, das beispielsweise an einer Supermarktkasse zum Erfassen und Registrieren von Waren zum Bezahlen durch einen Kunden dienen kann.

Das Warencheckout-System 1 weist eine Fördereinrichtung 2 mit mehreren Förderbandabschnitten 20, 21, 22, 23, 24 auf. Auf einen ersten Förderbandabschnitt 20 kann ein Kunde hierbei Waren ablegen. Über diesen ersten Förderbandabschnitt 20 werden die Waren durch eine Scaneinrichtung 3 hindurch gefördert, um die Waren in der Scaneinrichtung 3 in automatischer Weise zu erfassen und beispielsweise anhand von auf den Waren angebrachten Barcodes zu registrieren. Von dem ersten Förderbandabschnitt 20 gelangen die Waren auf einen zweiten Förderbandabschnitt 21 und entlang eines Förderpfads P über einen dritten Förderbandabschnitt 22 auf einen Förderbandabschnitt 23, der einer Packmulde 40 eines Packmuldensystems 4 zugeordnet ist. In der Packmulde 40 sammeln sich die Waren, sodass die Waren von dem Kunden wiederum entnommen und beispielsweise zum Mitnehmen verpackt werden können. An einer Bezahleinrichtung 5 kann der Kunde die Waren schließlich bezahlen.

Das Packmuldensystem 4 weist mehrere Packmulden 40, 41 (bei dem dargestellten Ausführungsbeispiel zwei Packmulden 40, 41) auf. Die Packmulden 40, 41 sind durch eine Warentrenneinrichtung 42 in Form einer Warenweiche voneinander getrennt, wobei diese Warenweiche 42 verstellt werden kann, um die Waren in die eine oder die andere Packmulde 40, 41 zu leiten.

Bei dem Warencheckout-System 1 werden die Waren in eine Förderrichtung F durch die Scaneinrichtung 3 hindurch hin zu einer jeweils empfangsbereiten Packmulde 40, 41 gefördert. Die empfangende Packmulde 40, 41 füllt sich sukzessive, bis sämtliche Waren eines Kunden registriert und der Packmulde 40, 41 zugeführt sind. Darauf wird die Warentrenneinrichtung 42 umgestellt, sodass nachfolgende Waren eines anderen Kunden hin zu einer anderen Packmulde 40, 41 geleitet werden.

Beim Befüllen einer Packmulde 40, 41 kann es dazu kommen, dass die Packmulde 40, 41 ihren maximal gefüllten Zustand erreicht, beispielsweise weil die Geschwindigkeit, mit der Waren in die Packmulde 40, 41 gefördert werden, größer ist als die Geschwindigkeit, mit der ein Kunde Waren aus der Packmulde 40, 41 entnimmt. Wird dies nicht erkannt, kann es zu einer weiteren Förderung von Waren hin zur Packmulde 40, 41 kommen, obwohl die Packmulde 40, 41 eigentlich voll ist, was zu einem Rückstau von Waren auf der Fördereinrichtung 2 führen kann.

Um ein Steuern des Warencheckout-Systems 1 in Abhängigkeit vom Füllstand der Packmulde 40, 41 zu ermöglichen, ist daher vorliegend eine Sensoreinrichtung 6 an der Packmulde 40, 41 angeordnet, die dazu dient, den Füllstand der Packmulde 40, 41 zu überwachen.

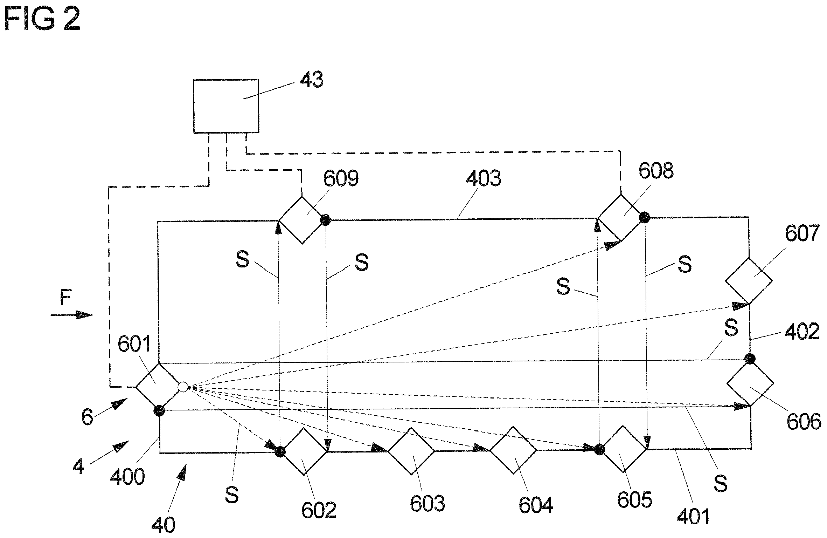

Ein erstes Ausführungsbeispiel einer solchen Sensoreinrichtung 6 an einer Packmulde 40 eines Packmuldensystems 4 zeigt Fig. 2. Bei der Sensoreinrichtung 6 sind eine Mehrzahl von Sensoreinheiten 601-609 an unterschiedlichen Wandungsabschnitten 400-403 der Packmulde 40 räumlich verteilt um die Packmulde 40 angeordnet. Die Wandungsabschnitte 400-403 begrenzen die Packmulde 40 kastenförmig und stellen somit äußere Wandungen der Packmulde 40 dar.

Bei dem dargestellten Ausführungsbeispiel sind Sensoreinheiten 601-609 vorgesehen, die Sensorsignale S entlang unterschiedlicher Signalpfade über die Packmulde 40 senden und somit die Packmulde 40 zumindest abschnittsweise mit einem Netz von Signalpfaden überspannen. Die Sensoreinheiten 601-609 können hierbei als Sender und/oder als Empfänger dienen und sind somit zum Aussenden von Sensorsignalen S und/oder zum Empfangen von Sensorsignalen S ausgebildet.

Bei dem dargestellten Ausführungsbeispiel sendet der an dem - betrachtet entlang der Förderrichtung F - vorderen Wandungsabschnitt 400 der Packmulde 40 angeordnete Sensor 601 Sensorsignale S aus, die von mehreren als Empfänger ausgebildete Sensoreinheiten 602-608 empfangen werden. Der Sensor 601 kann hierbei gleiche Sensorsignale S aussenden, sodass jeder empfangende Sensor 602-608 das gleiche Sensorsignal S empfängt. Alternativ ist denkbar, dass der Sensor 601 unterschiedliche Sensorsignale S aussenden, wobei jedem Empfänger 602-608 ein individuelles Sensorsignale S eindeutig zugeordnet ist.

Zudem sind bei dem Ausführungsbeispiel gemäß Fig. 2 Paare von Sensoreinheiten 601-609 gebildet, die sich wechselseitig Sensorsignale S übersenden. So ist dem Sensor 601 der Sensor 606 zugeordnet, wobei die Sensoren 601, 606 jeweils ein Sensorsignal S aussenden und das jeweils vom anderen Sensor 606, 601 ausgesendete Sensorsignal S empfangen. Die Sensoreinheiten 601,606 liegen sich hierbei an gegenüberliegenden Wandungsabschnitten 400, 402 gegenüber.

Zudem ist dem Sensor 602 der Sensor 609 und dem Sensor 605 der Sensor 608 zugeordnet. Diese Sensoren 602, 609 bzw. 605, 608 liegen sich paarweise an den Wandungsabschnitten 401, 403 gegenüber und tauschen paarweise Sensorsignale S aus, sodass jeder Sensor 602, 609, 605, 608 ein Sensorsignal S aussendet, das vom jeweils anderen Sensor 609, 602, 608, 605 empfangen wird und umgekehrt.

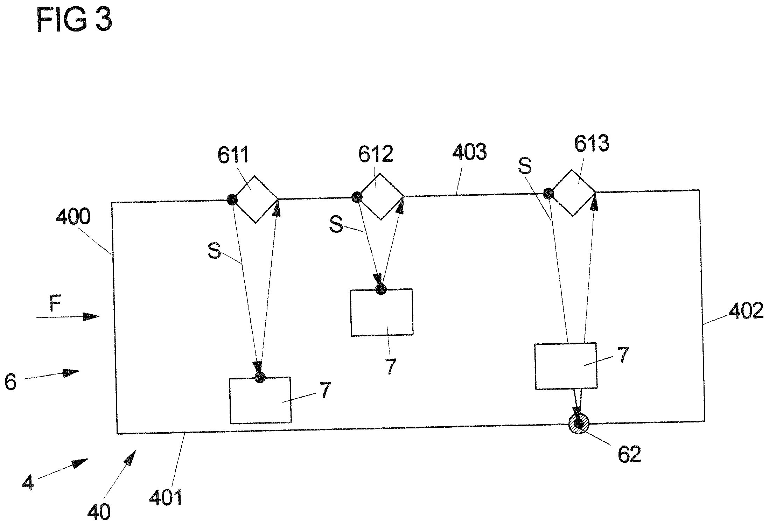

Ein anderes Ausführungsbeispiel ist in Fig. 3 dargestellt. Bei diesem Ausführungsbeispiel sind an einem Wandungsabschnitt 403 der Packmulde 40 drei Sensoren 611, 612, 613 angeordnet, die als Reflektionssensoren ausgestaltet sind. Die Sensoren 611-613 senden jeweils ein Sensorsignal S aus, das an einem in der Packmulde 40 befindlichen Warenobjekt 7 (bei den Sensor 611, 612) oder an der gegenüberliegenden Wandung 401 (bei dem Sensor 613) reflektiert wird. Bei den Sensoren 611, 612 kann durch Auswerten von an den Sensoren 611, 612 empfangenen reflektierten Signalanteilen auf das Vorhandensein und gegebenenfalls auch den Abstand eines Warenobjekts 7 in der Packmulde 40 geschlossen werden. Bei dem Sensor 613 kann erkannt werden, ob ein Warenobjekt 7 den Signalpfad zwischen dem Sensor 613 und dem gegenüberliegenden Reflektionspunkt 62 unterbricht, um anhand dieses Unterbrechens auf das Vorhandensein eines Warenobjekts 7 zu schließen.

Bei den Sensoren 611, 612 handelt es sich um sogenannte Reflextaster, die die Reflexion an dem Warenobjekt 7 selbst auswerten. Durch Auswertung, ob ein reflektiertes Signal an dem Sensor 611, 612 empfangen wird, kann somit auf das Vorhandensein eines Warenobjekts 7 geschlossen werden.

Bei dem Sensor 613 handelt es sich demgegenüber um eine Reflex-Lichtschranke, die auswertet, ob ein an einem Reflexionspunkt 62 reflektierter Lichtstrahl durch ein Warenobjekt 7 unterbrochen wird. Hierbei kann beispielsweise dadurch, dass an dem Reflexionspunkt 62 eine Polarisierung des reflektierten Signals erfolgt, unterschieden werden, ob ein an dem Sensor 613 empfangenes reflektiertes Signal durch eine Reflexion an dem Warenobjekt 7 oder an dem Reflexionspunkt 62 bewirkt worden ist.

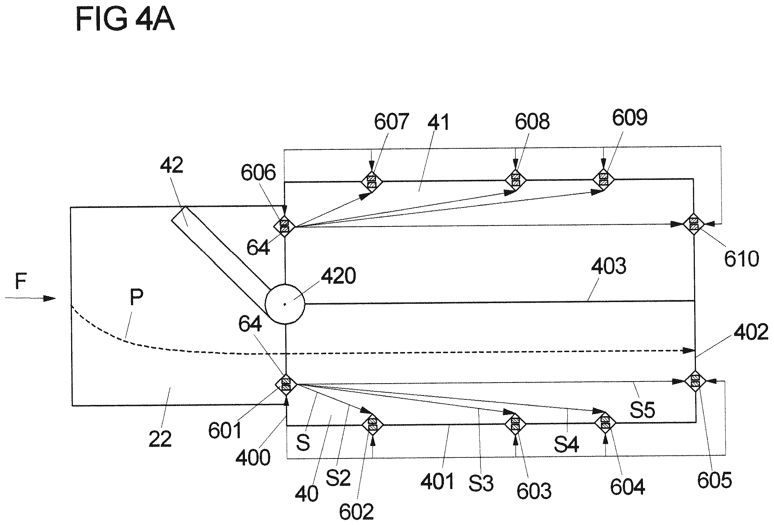

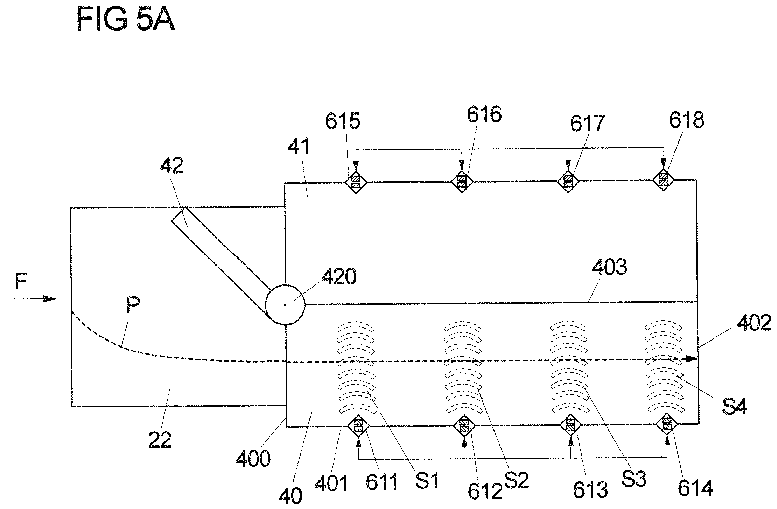

Die Funktionsweise zur Erfassung eines Füllstandes soll nachfolgend anhand von Fig. 4A bis 4E für das Ausführungsbeispiel gemäß Fig. 2 und anhand von Fig. 5A bis 5D für das Ausführungsbeispiel gemäß Fig. 3 erläutert werden.

Bei dem Ausführungsbeispiel gemäß Fig. 4A bis 4E sind an zwei benachbarten Packmulden 40, 41 eines Packmuldensystems 4 jeweils eine Mehrzahl von Sensoreinheiten 601-610 angeordnet. Gegenüber dem Ausführungsbeispiel gemäß Fig. 2 ist dieses Ausführungsbeispiel hierbei derart vereinfacht, dass für jede Packmulde 40, 41 eine Sensoreinheit 601, 606 als Sender von Sensorsignalen S dient, während die übrigen Sensoreinheiten 602-605 bzw. 607-610 als Empfänger dienen. Mittels der zwischen den unterschiedlichen Sensoreinheiten 601-610 ausgebildeten Signalpfade S2-S5 wird jede Packmulde 40, 41 nach Art eines Netzes zumindest abschnittsweise überspannt, um anhand einer Interaktion von Warenobjekten 7 mit den Sensorsignalen S auf den Füllstand der jeweiligen Packmulde 40, 41 zu schließen.

In dem Ausgangszustand gemäß Fig. 4A befindet sich die Warentrenneinrichtung 42, die um eine Schwenkachse 420 schwenkbar an der die Packmulden 40, 41 trennenden Wandung 403 angeordnet ist, in einer Stellung, in der die in Fig. 4A untere Packmulde 40 zugänglich, die benachbarte, andere Packmulde 41 hingegen in Förderrichtung F gesperrt ist. Waren, die über den Förderabschnitt 22 somit hin zu den Packmulden 40, 41 gefördert werden, treffen auf die Warentrenneinrichtung 42 und werden hin zu der Packmulde 40 geleitet und somit in die Packmulde 40 hinein gefördert.

In dem Ausgangszustand gemäß Fig. 4A ist die Packmulde 40 leer. Es befinden sich keine Warenobjekte 7 in der Packmulde 40. Entsprechend werden die von dem als Sender dienenden Sensor 601 ausgesendeten Sensorsignale S von den als Empfänger dienenden Sensoreinheiten 602-605 empfangen. Die zwischen den Sensoreinheiten 601-605 gebildeten Signalpfade S2-S5 sind nicht unterbrochen.

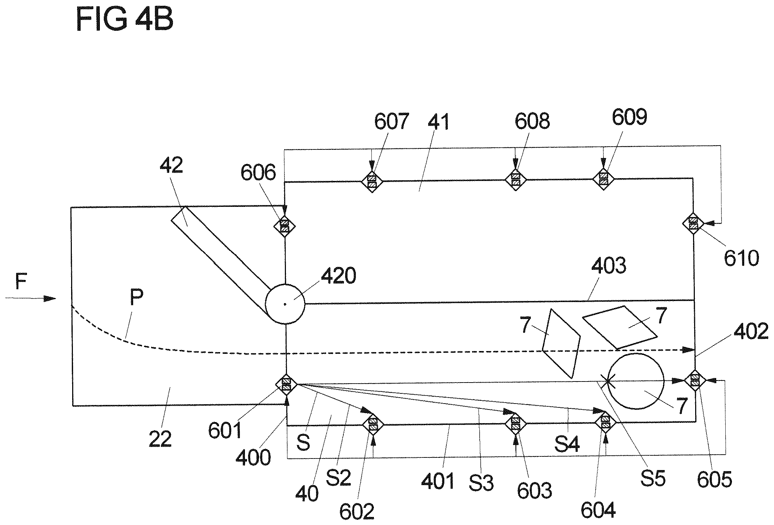

Füllt sich die Packmulde 40, weil Waren 7 in die Packmulde 40 gefördert werden, wie dies in Fig. 4B dargestellt ist, so wird zunächst der zwischen der Sensoreinheit 601 und dem gegenüberliegenden Sensor 605 gebildete Signalpfad S5 unterbrochen. Die Sensoreinheiten 601-610 sind, wie schematisch in Fig. 2 illustriert, mit einer Steuereinrichtung 43 verbunden, die anhand der an den Sensoreinheiten 602-605 empfangenen Sensorsignale S Sensordaten generiert und diese zur Füllstandsbestimmung auswertet. Wird mittels der Steuereinrichtung 43 festgestellt, dass der Signalpfad S5 unterbrochen ist (die übrigen Signalpfade S2-S4 hingegen nicht), so wird darauf geschlossen, dass die Packmulde 40 in etwa zu 25 % gefüllt ist.

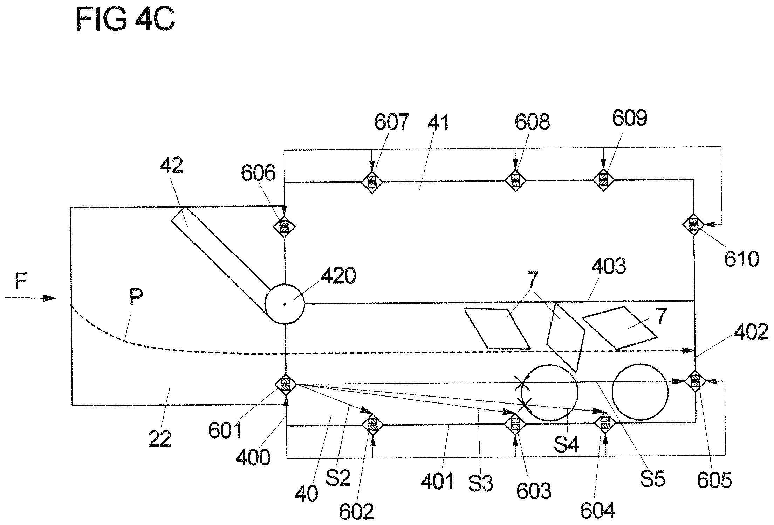

Füllt sich die Packmulde 40 weiter, wie dies in Fig. 4C dargestellt ist, so wird als nächstes der Signalpfad S4 zwischen der als Sender dienenden Sensoreinheit 601 und dem als Empfänger dienenden Sensor 604 unterbrochen, was durch die Steuereinrichtung 43 erkannt und ausgewertet wird. Die Steuereinrichtung 43 schließt daraus darauf, dass die Packmulde 40 in etwa zu 50 % gefüllt ist.

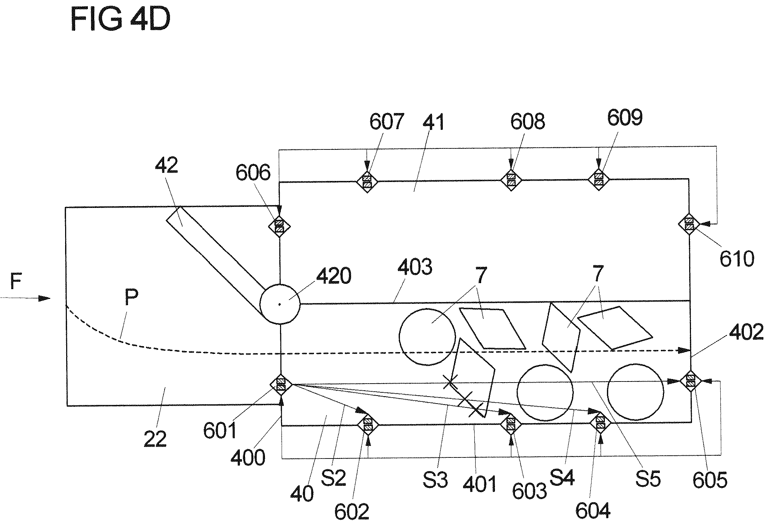

Füllt sich die Packmulde 40 weiter, so wird als nächstes der Signalpfad S3 zwischen der Sensoreinheit 601 und der Sensoreinheit 603 unterbrochen, wie in Fig. 4D dargestellt, woraus die Steuereinrichtung 43 schließt, dass die Packmulde 40 in etwa zu 75 % gefüllt ist.

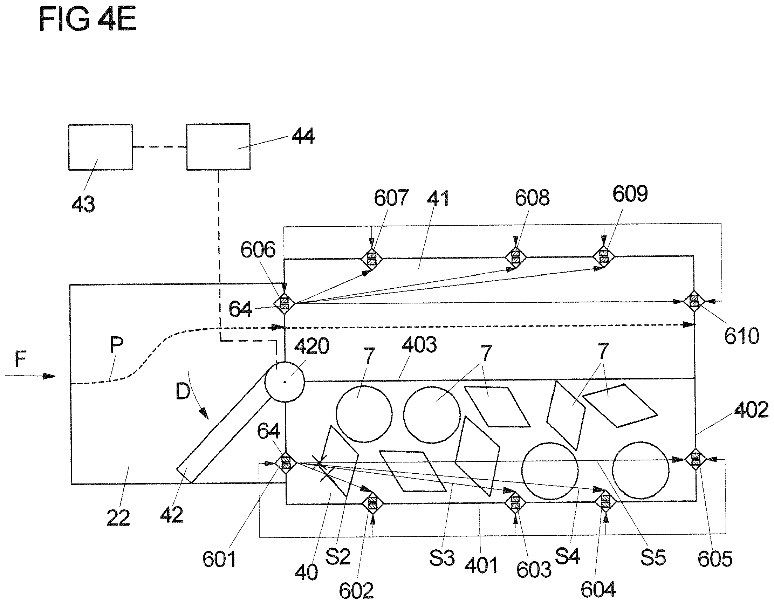

Schließlich wird, wie in Fig. 4E dargestellt, auch der Signalpfad S2 zwischen der Sensoreinheit 601 und der Sensoreinheit 602 unterbrochen, woraus die Steuereinrichtung 43 schließt, dass die Packmulde zu 100 % gefüllt ist.

Im gefüllten Zustand gemäß Fig. 4E sind sämtliche Signalpfade S2-S5 unterbrochen. Beim Füllstand von 75 % (Fig. 4D) sind die Signalpfade S3-S5 unterbrochen, beim Füllstand von 50 % (Fig. 4C) die Signalpfade S4 und S5. Damit auf einen bestimmten Füllstand erkannt wird, ist erforderlich, dass alle vorangehenden Signalpfade (z.B. für den Füllstand 75 % zusätzlich zu dem Signalpfad S3 auch die vorangehenden Signalpfade S4, S5) unterbrochen sind. Auf diese Weise wird unterschieden zwischen einem (kurzfristigen) Unterbrechen eines Signalpfads S2-S5 beim Hineinfördern eines Warenobjekts 7 in die Packmulde 40 und dem eigentlichen sukzessiven Befüllen der Packmulde 40.

Die Erkennung des Füllstandes kann für eine Steuerung der Fördereinrichtung 2 verwendet werden. So kann vorgesehen sein, abhängig vom Füllstand der Packmulde 40 die Fördergeschwindigkeit des Förderbandabschnitts 22 und auch anderer Förderbandabschnitte 20, 21, 23, 24 zu steuern. So kann vorgesehen sein, die Fördergeschwindigkeit des Förderbandabschnitts 22 bei leerer Packmulde 40 (Fig. 4A) und bei zu 25 % gefüllter Packmulde 40 (Fig. 4B) maximal einzustellen. Wird der Füllstand von 50 % (Fig. 4C) erreicht, so kann die Steuereinrichtung 43 den Förderbandabschnitt 22 zum Reduzieren der Fördergeschwindigkeit ansteuern, sodass der Förderbandabschnitt 22 z.B. nur noch mit halber Fördergeschwindigkeit angetrieben wird. Ist die Packmulde 40 voll (Fig. 4E), kann der Förderbandabschnitt 42 schließlich gestoppt werden.

Zudem kann abhängig vom Füllstand auch die Warentrenneinrichtung 42 angesteuert werden. So kann vorgesehen sein, wie in Fig. 4E veranschaulicht, dass bei voller Packmulde 40 die Steuereinrichtung 43 eine Antriebseinrichtung 44 der Warentrenneinrichtung 42 ansteuert, um die Warentrenneinrichtung 42 um die Schwenkachse 420 zu verschwenken und somit die Packmulde 40 zu versperren und die andere, benachbarte Packmulde 41 für einen Warenempfang zugänglich zu machen. Über den Förderbandabschnitt 22 beförderte Waren werden somit entlang des nunmehr in die Packmulde 41 hinein gerichteten Förderpfads P in die Packmulde 41 hinein geleitet.

An den Sensoreinheiten 601-610 können Anzeigeeinrichtungen 64 in Form von Leuchtdioden oder dergleichen vorgesehen sein (siehe Fig. 4A). Diese Anzeigeeinrichtungen 64 können dazu dienen, unterschiedliche Zustände der Packmulden 40, 41 anzuzeigen.

Die Sensoreinheiten 601-610 können zusätzlich oder alternativ auch mit externen Anzeigeeinrichtungen verbunden sein, über die eine Signalisierung erfolgen kann. Zudem ist möglich, eine Signalisierung auch räumlich getrennt von den Sensoreinheiten 601-610 vorzunehmen, beispielsweise indem geeignete Aktoren angesteuert werden oder eine Signalisierung über eine zentrale Steuereinheit, beispielsweise ein Display der zentralen Steuereinheit, erfolgt.

So kann vorgesehen sein, dass in dem Zustand gemäß Fig. 4A die Anzeigeeinrichtungen 64 an den Sensoreinheiten 601-605 der Packmulde 40 grün aufleuchten, um zu signalisieren, dass die Packmulde 40 bereit ist zum Empfangen von Waren. Die Anzeigeeinrichtungen 64 an der anderen Packmulde 41 hingegen können beispielsweise rot aufleuchten, um anzuzeigen, dass keine Waren in diese Packmulde 41 hinein gefördert werden können. Füllt sich die Packmulde 40 beispielsweise bis zum Füllstand von 75 % (Fig. 4D), so können die Anzeigeeinrichtungen 64 der Sensoreinheiten 601-605 der Packmulde 40 ihre Farbe von grün zu orange ändern, um anzuzeigen, dass sich die Packmulde 40 zu einem großen Teil gefüllt hat. Ist die Packmulde 40 schließlich voll (Fig. 4E) so können die Anzeigeeinrichtungen 64 der Sensoreinheiten 601-605 der Packmulde 40 ihre Farbe hin zu Rot ändern, während die Anzeigeeinrichtungen 64 der Sensoreinheiten 606-610 der Packmulde 41 auf Grün schalten, um nunmehr anzuzeigen, dass die Packmulde 41 bereit ist zum Empfangen von Waren.

Die Zuordnung eines Füllstandwertes zu Sensorsignalen an den einzelnen Sensoreinheiten 601-605 ist in der nachstehenden Tabelle veranschaulicht:

| **Sensor** | **Bedeutung wenn Sensor X belegt** | **Steuerungsmaßnahme** |
|---|---|---|
| **605** | Füllstand 25% | Anzeigeeinrichtungen 64 leuchten grün |
| **604** | Füllstand 50% | Bandgeschwindigkeit des Förderbands 22 wird verringert, Anzeigeeinrichtungen 64 leuchten grün |
| **603** | Füllstand 75% | Bandgeschwindigkeit des Förderbandabschnitts 22 verringert, Anzeigeeinrichtungen 64 leuchten orange |
| **602** | Füllstand 100% | Förderband 22 stoppt, Anzeigeeinrichtungen 64 leuchten rot, Warentrenneinrichtung 42 wird verstellt zur Freigabe einer anderen Packmulde |

Bei dem Ausführungsbeispiel gemäß Fig. 5A bis 5B sind an den Packmulden 40, 41 an einem längserstreckten, äußeren Wandungsabschnitt 401 jeweils vier Sensoreinheiten 611-618 angeordnet, die Reflektionssensoren verwirklichen. Jeder Sensor 611-618 sendet hierbei ein Sensorsignal S entlang von parallelen Signalpfaden S1-S4 aus.

In dem Ausgangszustand gemäß Fig. 5A ist die Packmulde 40 leer und bereit zum Empfangen von Waren, während die andere Packmulde 41 durch die Warentrenneinrichtung 42 versperrt ist. An den Sensoreinheiten 611-614 der Packmulde 40 werden in diesem Fall keine (oder nur schwache) reflektierte Signale empfangen.

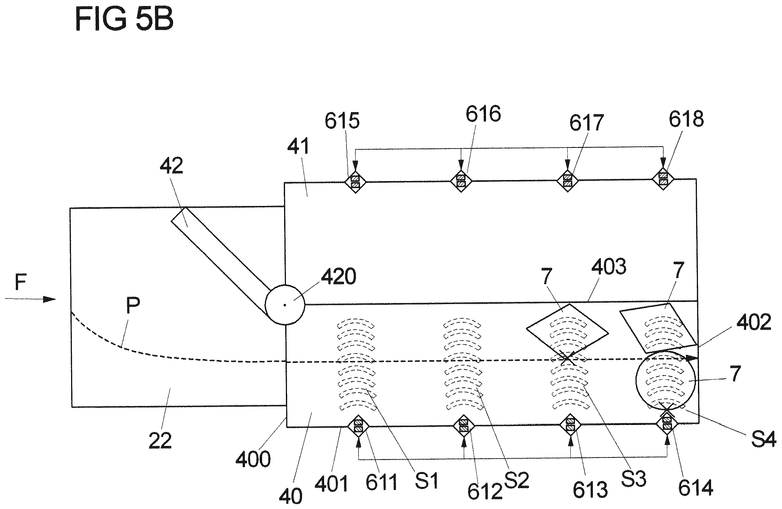

Füllt sich die Packmulde 40, wie in Fig. 5B dargestellt, sammeln sich Waren 7 zunächst im Bereich der letzten Sensoreinheit 614, deren Signalpfad S4 somit unterbrochen wird. An den Warenobjekten 7 kommt es hierbei zu einer Reflektion, die an der Sensoreinheit 614 als reflektiertes Signal empfangen wird.

Die Sensoreinheiten 611-614 weisen jeweils einen Nahbereich und einen Fernbereich auf. Zwischen dem Nahbereich und dem Fernbereich wird anhand der Signalpegel der reflektierten Signale unterschieden. Ist das reflektierte Signal stark und liegt der Signalpegel des empfangenen, reflektierten Signals über einem ersten Schwellwert, so wird daraus geschlossen, dass sich das reflektierende Warenobjekt 7 im Nahbereich des Sensors 611-614 befindet. Liegt der Signalpegel des empfangenen, reflektierten Signals hingegen unter dem ersten Schwellwert, aber über einem zweiten Schwellwert, so wird daraus geschlossen, dass sich das reflektierende Warenobjekt 7 im Fernbereich des Sensors 611-614 befindet.

In dem Zustand gemäß Fig. 5B befinden sich Warenobjekte 7 derart in dem Bereich der Sensoreinheit 614, dass eine Reflektion im Nahbereich stattfindet und an der Sensoreinheit 614 entsprechend detektiert wird. Die vorgelagerte Sensoreinheit 613 hingegen empfängt ein reflektiertes Signal im Fernbereich, bedingt durch ein Warenobjekt 7, das sich im Fernbereich des Sensors 613 befindet. Aus dieser Kombination wird geschlossen, dass die Packmulde 40 einen Füllstand zwischen 25 % und 50 % aufweist.

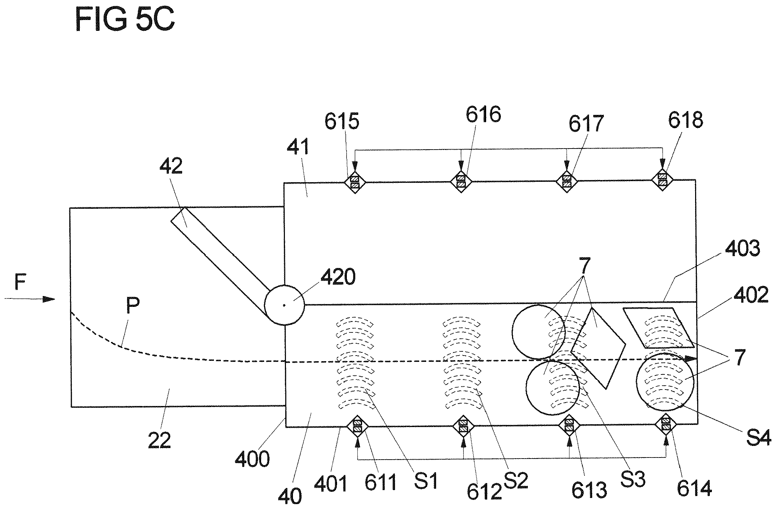

In dem Zustand gemäß Fig. 5C erfassen die Sensoreinheiten 613, 614 jeweils Warenobjekte 7 im Nahbereich. Hieraus wird geschlossen, dass sich die Packmulde 40 zu 50 % gefüllt hat.

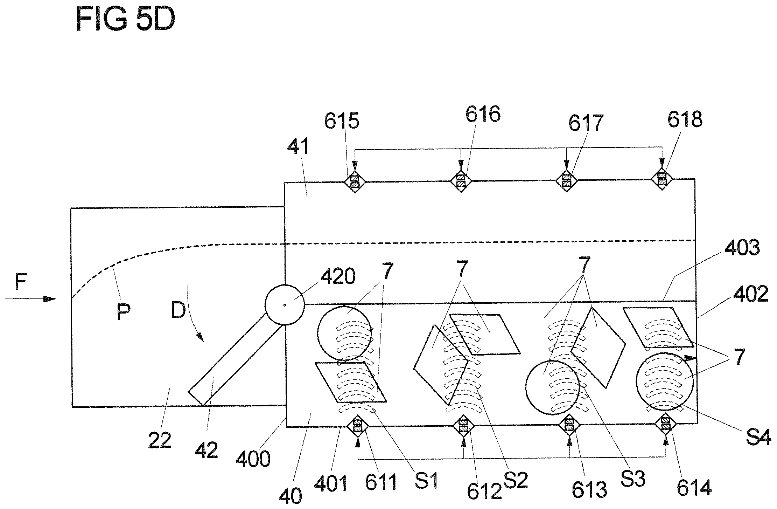

Ist die Packmulde 40 vollständig gefüllt, wie in Fig. 5D veranschaulicht, so empfangen sämtliche Sensoreinheiten 611-614 reflektierte Signale im Nahbereich.

Abhängig vom Füllstand kann wiederum eine Steuerung der Förderrichtung 2 und eine Steuerung der Warentrenneinrichtung 42 erfolgen, wie dies vorangehend für das Ausführungsbeispiel gemäß Fig. 4A bis 4E beschrieben worden ist.

Die Zuordnung eines Füllstand zu an den Sensoreinheiten 611-614 empfangenen reflektierten Sensorsignalen ist in der nachstehenden Tabelle veranschaulicht:

| **Zustand** | **Bedeutung** | **Belegte Sensoren** | **Reaktion auf Grundlage der Sensorinformationen** |
|---|---|---|---|
| **1** | 0%, leer | Keine | Anzeigeeinrichtungen 64 leuchten grün |
| **2** | 0% -25% | Fernbereich Sensor 614 | Anzeigeeinrichtungen 64 leuchten grün |
| **3** | 25% | Fern- und Nahbereich Sensor 614 | Anzeigeeinrichtungen 64 leuchten grün |
| **4** | 25% -50% | Fern- und Nahbereich Sensor 614, Fernbereich Sensor 613 | Anzeigeeinrichtungen 64 leuchten grün |
| **5** | 50% | Fern- und Nahbereich Sensor 614, Fern- und Nahbereich Sensor 613 | Bandgeschwindigkeit des Förderbandabschnitts 22 verringert, Anzeigeeinrichtungen 64 leuchten grün |
| **6** | 50% -75% | Fern- und Nahbereich Sensor 614, Fern- und Nahbereich Sensor 613, Fernbereich Sensor 612 | Bandgeschwindigkeit des Förderbandabschnitts 22 verringert, Anzeigeeinrichtungen 64 leuchten grün |
| **7** | 75% | Fern- und Nahbereich Sensor 614, Fern- und Nahbereich Sensor 613, Fern- und Nahbereich Sensor 612 | Bandgeschwindigkeit des Förderbandabschnitts 22 verringert, Anzeigeeinrichtungen 64 leuchten orange |
| **8** | 75% -100% | Fern- und Nahbereich Sensor 614, Fern- und Nahbereich Sensor 613, Fern- und Nahbereich Sensor 612, Fernbereich Sensor 611 | Bandgeschwindigkeit des Förderbandabschnitts 22 verringert, Anzeigeeinrichtungen 64 leuchten orange |
| **9** | 100%, voll | Fern- und Nahbereich Sensor 614, Fern- und Nahbereich Sensor 613, Fern- und Nahbereich Sensor 612, Fern- und Nahbereich Sensor 611 | Förderband 22 stoppt, Anzeigeeinrichtungen 64 leuchten rot, Warentrenneinrichtung 42 wird verstellt zur Freigabe einer anderen Packmulde |

Zum Aufspannen eines Netzes von Sensoreinheiten 601-610, wie bei dem Ausführungsbeispiel gemäß Fig. 2 oder dem Ausführungsbeispiel gemäß Fig. 4A bis 4E, sind die Sensoreinheiten 601-610 derart einander zugeordnet, das beispielsweise N Empfänger Sensorsignale S von einem Sender empfangen. Hierzu ist erforderlich, dass das System eingelernt wird, also Paare von Sensoreinheiten 601-610 gebildet werden, zwischen denen Signalpfade S2-S5 aufgespannt sind.

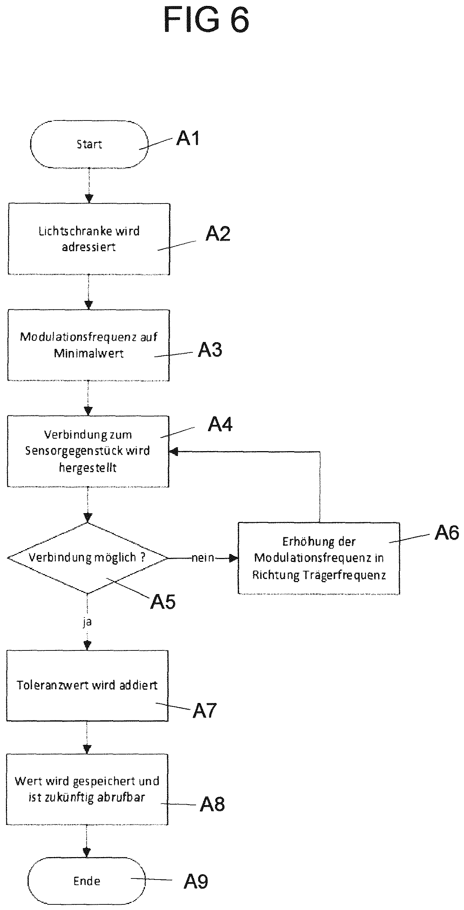

Das Einlernen kann zunächst darauf ausgerichtet sein, beispielsweise bei dem Ausführungsbeispiel gemäß Fig. 4A bis 4E überhaupt einen Verbindungsaufbau zwischen einem als Sender dienenden Sensor 601 und den als Empfängern dienenden Sensoren 602-605 aufbauen zu können. Ein Ablaufdiagramm hierfür ist in Fig. 6 dargestellt.

Nach dem Start (Schritt A1) wird zunächst eine sendende Sensoreinheit 601 adressiert und aufgefordert, ein Sensorsignal S an eine zugeordnete empfangende Sensoreinheit 602-605 zu senden (Schritt A2). Die Modulationsfrequenz des Sensorsignals S wird hierbei zunächst beispielsweise auf einen Default-Wert, entsprechend einem Minimalwert der Modulationsfrequenz, eingestellt (Schritt A3). Nun wird geprüft, ob eine Verbindung zu der empfangenden Sensoreinheit 602-605 hergestellt werden kann, die empfangende Sensoreinheit 602-605 also das Sensorsignal S von der sendenden Sensoreinheit 601 empfängt (Schritte A4 und A5). Kommt keine Verbindung zustande, liegt also kein Empfang bei der empfangenden Sensoreinheit 602-605 vor, so wird die Modulationsfrequenz beispielsweise in Richtung einer Trägerfrequenz erhöht (Schritt A6).

Nunmehr wird erneut in den Schritten A4 und A5 geprüft, ob eine Verbindung zustande kommt. Kommt eine Verbindung zustande, so wird zu der verwendeten Modulationsfrequenz ein Toleranzwert addiert (Schritt A7), die Modulationsfrequenz wird gespeichert und zukünftig für den Verbindungsaufbau mit dieser Sensoreinheit 602-605 verwendet (Schritt A8). Der Prozess wird sodann beendet (Schritt A9).

Zum Senden der Sensorsignale S in den Schritten A1 und A2 zwischen einer sendenden Sensoreinheit 601 und einer empfangenden Sensoreinheit 602-605 und zum Einlernen des Systems kann auf unterschiedliche Weise vorgegangen werden.

Besteht beispielsweise eine eindeutige Zuordnung zwischen einer sendenden Sensoreinheit 601 und einer empfangenden Sensoreinheit 602-605, so werden die entsprechend zugeordneten Ports der Steuereinrichtung 43 (siehe Fig. 2) aktiviert, sodass die sendenden Sensoreinheit 601 ein Sensorsignal S aussendet, das von der empfangenden Sensoreinheit 602-605 empfangen wird.

Sind einem Sender 601 mehrere Empfänger 602-605 zugeordnet, so wird der Sender 601 aktiv geschaltet und sendet Sensorsignale aus. Die empfangenden Sensoreinheiten 602-605 werden durch Aktivierung der entsprechenden Ports der Steuereinrichtung 43 in sequenzieller Weise aktiv geschaltet, sodass an den empfangenden Sensoreinheiten 602-605 in sequenzieller Weise ein Sensorsignal von der sendenden Sensoreinheit 601 empfangen wird. Die Steuereinrichtung 43 erhält zu einem Zeitpunkt ein Signal von einer empfangenden Sensoreinheit 602-605, die gerade aktiv geschaltet ist.

Ist eine empfangende Sensoreinheit einer Mehrzahl von sendenden Sensoreinheiten zugeordnet, so ist der Empfänger aktiv, während die sendenden Sensoreinheiten in sequenzieller Weise zum Aussenden von Sensorsignalen angesteuert werden. An der empfangenden Sensoreinheit wird somit zu einem Zeitpunkt ein Signal von einer gerade sendenden Sensoreinheit empfangen.

Als Default-Wert für die Trägerfrequenz kann beispielsweise eine Frequenz von 38 kHz verwendet werden. Die Variation der Trägerfrequenz kann beispielsweise in Schritten von ca. 75 Hz erfolgen. Beispielsweise kann ein Empfänger bei der Default-Trägerfrequenz von 38 kHz die größte Empfindlichkeit aufweisen, wobei durch Variation der Modulationsfrequenz die Sensitivität des Empfängers verändert werden kann. Durch gezielte Verschlechterung der Sensitivität kann am Empfänger beispielsweise eine (geringe) Dämpfung eingestellt werden, die ein Sensieren beispielsweise von transparenten Objekten ermöglicht.

Zur Erkennung der Sensoreinheiten 601-605 untereinander ist an sich nur erforderlich, dass die Sensoreinheiten 601-605 miteinander Signale austauschen. Dies kann in zeitlich sequenzieller Weise erfolgen, wie vorangehend beschrieben. In diesem Fall müssen die Sensorsignale S keine besondere Gestalt aufweisen und insbesondere keine spezielle Kennung enthalten.

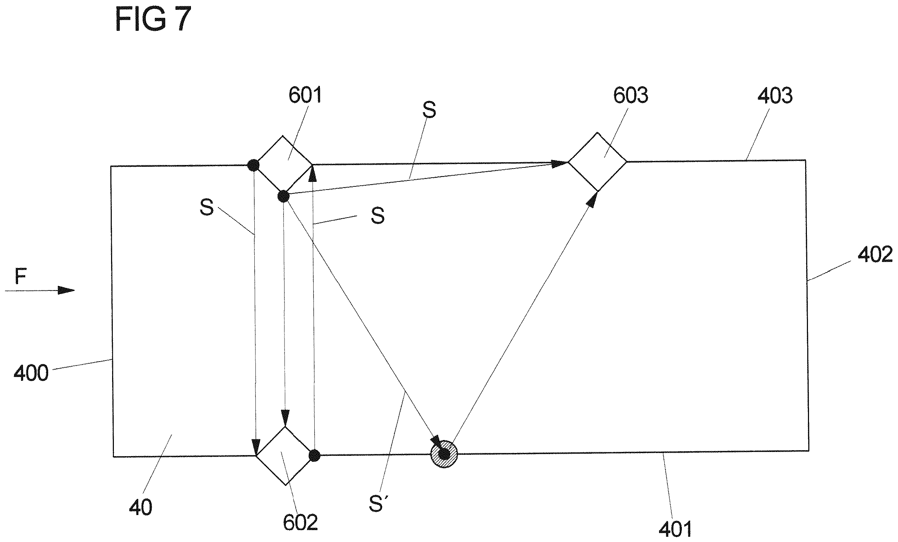

Damit sich die Sensoreinheiten untereinander gegenseitig identifizieren können, können die Sensoreinheiten 601-610 aber auch mit einer eigenen Adresse in Form einer Identifizierungskennung versehen sein. Um sich gegenseitig zu identifizieren, können die Sensoreinheiten 601-610 in diesem Fall ihre Identifizierungscodes austauschen, was eine eindeutige Erkennung und Zuordnung der Sensorsignale S zu einem bestimmten Sender möglich macht, sodass mehrere Sender ihre Sensorsignale im Rahmen des Einlernens auch gleichzeitig aussenden können. Wird, gesteuert durch die Steuereinrichtung 43, beispielsweise bei der Anordnung gemäß Fig. 7 die Sensoreinheit 601 aufgefordert, sich gegenüber den anderen Sensoreinheiten 602, 603 zu identifizieren, sendet die Sensoreinheit 601 ein Testsignal aus, dass die Kennung der sendenden Sensoreinheit 601 enthält. Die empfangenden Sensoreinheiten 602, 603 können somit anhand des empfangenen Testsignals die sendenden Sensoreinheiten 601 eindeutig identifizieren, wobei unterschiedliche Signalausbreitungswege, beispielsweise auch indirekte Ausbreitungswege durch Reflektion an einem Wandungsabschnitt 401 (Signal S') möglich sind.

Ein solches Testsignal kann beispielsweise die Form einer Bitfolge aufweisen, in deren Rahmen beispielsweise unterschiedliche Pulse gesendet werden. So kann ein Sensorsignal S beispielsweise drei Pulse mit einer Länge von jeweils 20 µs und einem hohen Signallevel aufweisen, zwischen denen jeweils Pulse mit einer Pulslänge von 35 µs und einem niedrigen Signallevel gesendet werden, sodass auf einen Puls mit einem hohen Signallevel ein Puls mit einem niedrigen Signallevel folgt. Es ergibt sich eine Pulsfolge 10101.

Bei einem solchen Testsignal kann es sich beispielsweise aber auch um eine eindeutige ID handeln, beispielsweise eine Adresskennung wie eine Mac-Adresse oder eine von der Steuereinrichtung 43 dynamisch vergebene ID.

Der Ausbreitungsweg kann gleichzeitig auch als Charakteristikum für die Positionsbestimmung der Sensoreinheiten 601-603 dienen. So können die Signalpegel der empfangenen Testsignale ausgewertet werden, um darüber den Abstand der empfangenden Sensoreinheiten 602, 603 von den sendenden Sensoreinheiten 601 zu bestimmen.

Durch die wiederholte Messung von Testsignalen und von deren Signalpegel kann zudem erkannt werden, ob es zu einer Änderung in der relativen Position der Sensoreinheiten 601-603 zueinander kommt.

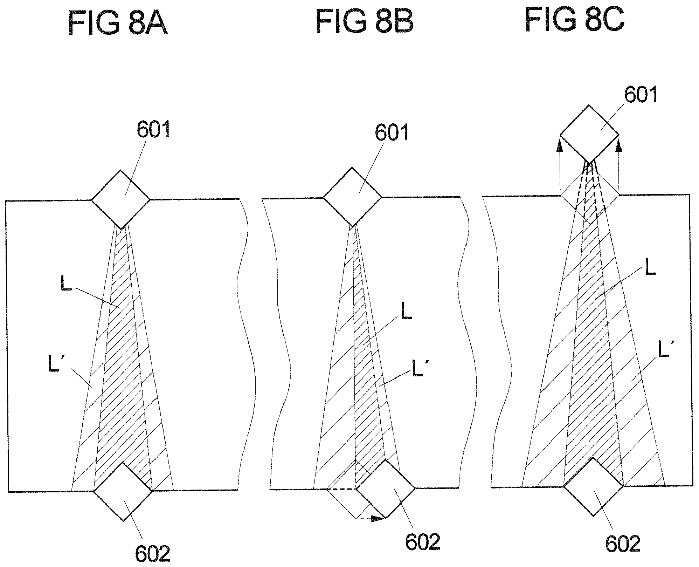

Dies ist in Fig. 8A bis 8C veranschaulicht. So wird eine empfangende Sensoreinheit 602, wenn sie in korrekter Lagebeziehung zu einer sendenden Sensoreinheit 601 angeordnet ist (Fig. 8A), ein Testsignal mit einem bestimmten Signalpegel empfangen. Die empfangende Sensoreinheit 602 ist dabei beispielsweise innerhalb eines Hauptlichtkegels L der sendenden Sensoreinheit 601 angeordnet und empfängt entsprechend ein vergleichsweise starkes Signal.

Wird die relative Position der empfangenden Sensoreinheit 602 relativ zur sendenden Sensoreinheit 601 verändert und die empfangende Sensoreinheit 602 beispielsweise in einen Streulichtkegel L' der sendenden Sensoreinheit 601 verschoben (Fig. 8B), so wird der Signalpegel des empfangenen Testsignals schwächer, was entsprechend gemessen werden kann. Ebenso wird der Signalpegel des empfangenen Testsignals schwächer, wenn sich der Abstand zwischen der sendenden Sensoreinheit 601 und der empfangenden Sensoreinheit 602 vergrößert (Fig. 8C), was ebenso entsprechend erkannt werden kann. Die räumliche Lageveränderung zwischen dem Sender und dem Empfänger kann beispielsweise auf einen Manipulationsversuch an der Sensoreinrichtung 6 hindeuten.

Ein solcher Streulichtkegel L' ergibt sich beispielsweise bei Infrarot-Sensoren, die Infrarot-LEDs verwenden. Generell weisen solche Infrarot-Sensoren entlang ihrer zentralen Lichtachse die größte Intensität auf, die radial zur Lichtachse nach außen hin abfällt. Es ergibt sich ein Streulichtkegel um die zentrale Lichtachse herum mit einem Kegelwinkel von beispielsweise 35°.

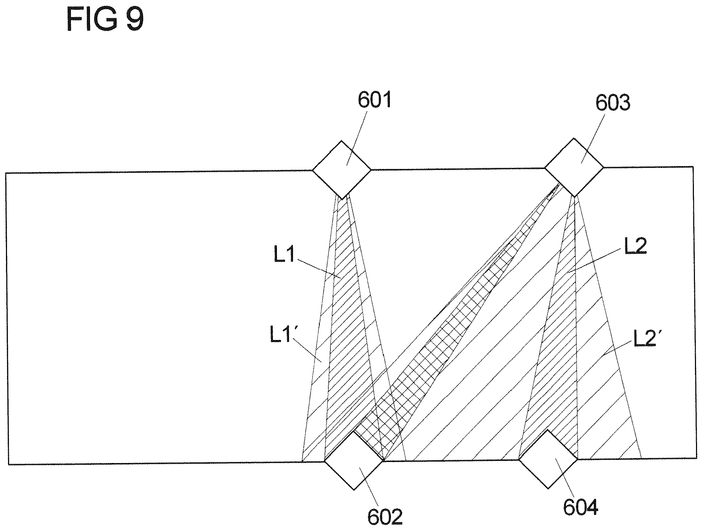

Zudem kann die Bestimmung der räumlichen Lagebeziehung zwischen Sensoreinheiten 601-604 auch durch Streulichtmessungen verbessert werden, wie in Fig. 9 veranschaulicht. So ist bei der Anordnung gemäß Fig. 9 sendenden Sensoreinheiten 601, 603 jeweils eine empfangende Sensoreinheit 602, 604 zugeordnet. Die sendende Sensoreinheit 601 sendet einen Hauptlichtkegel L1 aus, in dem sich die zugeordnete empfangende Sensoreinheit 602 befindet, und strahlt zudem einen Streulichtkegel L1' ab. Die andere sendende Sensoreinheit 603 sendet einen Hauptlichtkegel L2 aus, innerhalb dessen sich die zugeordnete empfangende Sensoreinheit 604 befindet. Zudem sendet diese sendende Sensoreinheit 603 auch einen vergleichsweise breiten Streulichtkegel L2' aus. Innerhalb dieses Streulichtkegels L2' befindet sich auch die eigentlich der sendenden Sensoreinheit 601 zugeordnete empfangende Sensoreinheit 602. Die der sendenden Sensoreinheit 601 zugeordnete empfangende Sensoreinheit 602 empfängt somit auch Streulicht aus dem Streulichtkegel L2' der anderen sendenden Sensoreinheit 603 und kann anhand einer Messung der Pegelstärke dieses Streulichts Rückschlüsse auf die relative Lagebeziehung zu der sendenden Sensoreinheit 603 ziehen.

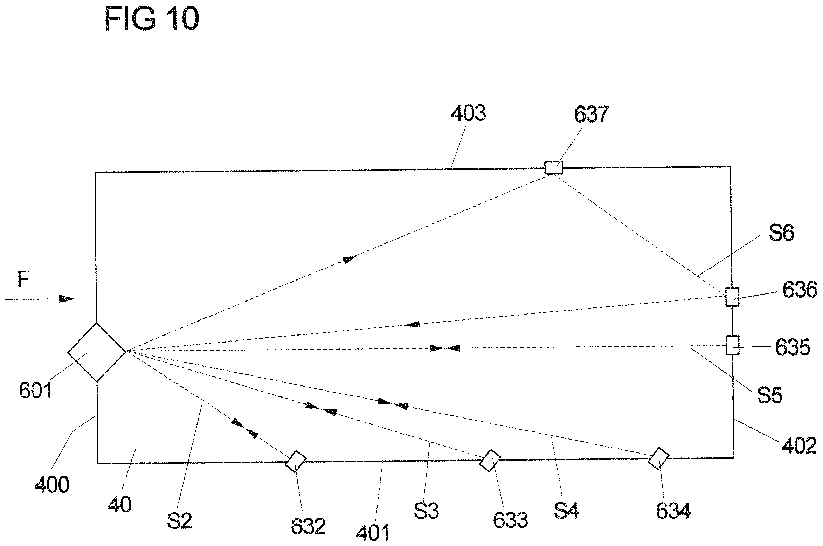

Grundsätzlich kann eine einzige Sensoreinheit zum Aufspannen eines Netzes von unterschiedlichen Signalpfaden S2-S6 ausreichen, wie dies in Fig. 10 veranschaulicht ist. Bei dem Ausführungsbeispiel gemäß Fig. 10 sendet eine Sensoreinheit 601 fünf unterschiedliche Sensorsignale aus, die auf unterschiedlichen Signalpfaden S2-S6 sich über die Packmulde 40 ausbreiten und, durch Reflektion an Reflektionspunkten 632-637 zurück zu der Sensoreinheit 601 geleitet werden und dort wieder empfangen werden. Hierbei sind auch Signalpfade möglich, die durch Mehrfachreflektion zurück zur Sensoreinheit 601 geleitet werden, wie bei dem Signalpfade S6 in Fig. 10. Anhand der Unterbrechung eines Signalpfads S2-S7 kann wiederum auf den Füllstand der Packmulde 40 geschlossen werden.

Beispielsweise werden die von der Sensoreinheit 601 abgestrahlten Sensorsignale anhand von Mustern generiert, die in einer Datenbank der Steuereinrichtung 43 hinterlegt sind. Auf diese Weise können unterschiedliche Sensorsignale erzeugt werden, die den einzelnen Signalpfade S2-S6 zugeordnet sind. Anhand der empfangenen Lichtpulse an der Sensoreinheit 601, beispielsweise anhand der Anzahl und der Dauer der Lichtpulse, können die den unterschiedlichen Signalpfaden S2-S6 zugeordneten Sensorsignale voneinander unterschieden werden.

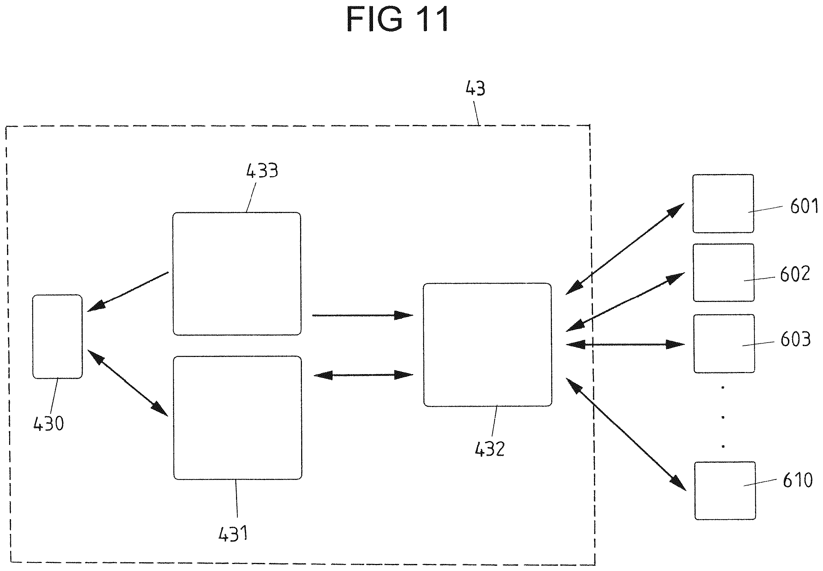

Fig. 11 zeigt eine schematische Ansicht von einer Steuereinrichtung 43 zum Steuern des Systems und insbesondere der Sensoreinheiten 601-610.

Es sei an dieser Stelle angemerkt, dass eine einheitliche Steuereinrichtung 43 vorgesehen sein kann, um die Sensoreinheiten 601-610 anzusteuern und eine Signalverarbeitung vorzunehmen. Denkbar und möglich ist aber auch, unterschiedliche Einheiten vorzusehen, die gemeinsam steuernde Funktionen übernehmen und dabei Bestandteil des Gesamtsystems sind.

Bei dem Ausführungsbeispiel gemäß Fig. 11 ist eine erste Steuereinheit 430 vorgesehen, die beispielsweise durch ein PC-System verwirklicht sein kann und beispielsweise zum Ausführen einer konkreten Anwendung eines Kassensystems dient. Mit dieser ersten Steuereinheit 430 steht eine zweite Steuereinheit 431 in Verbindung, die beispielsweise als speicherprogrammierbare Steuerung (SPS) oder auch als Elektroniksteuerung ausgeführt sein kann und mit einer dritten Steuereinheit 432 in Verbindung steht.

Über die dritte Steuereinheit 432 werden die Sensoreinheiten 601-610 angesteuert, und an der dritten Steuereinheit 432 findet beispielsweise auch eine erste Signalauswertung von Signalen, die von den Sensoreinheiten 601-610 empfangen werden, statt. Beispielsweise kann die dritte Steuereinheit 432, die beispielsweise als Elektronikboard ausgestaltet sein kann, anhand der von den Sensoreinheiten 601-610 empfangenen Signale bereits eine erste Auswertung eines Füllstands einer Packmulde 40, 41 vornehmen.

Die dritte Steuereinheit 432 kann beispielsweise auch in die zweite Steuereinheit 431 integriert sein. Denkbar und möglich ist aber auch, die dritte Steuereinheit 432 und die zweite Steuereinheit 431 als separate Einheiten auszuführen, die über eine geeignete Verbindung, beispielsweise eine Datenverbindung in Form einer Netzwerkverbindung, miteinander verbunden sind.

Die dritte Steuereinheit 432 kann beispielsweise eine erste Auswertung der von den Sensoreinheiten 601-610 empfangenen Signale vornehmen. Ergebnisse dieser ersten Auswertung können an die übergeordnete, zweite Steuereinheit 431 gesendet werden, die eine weitere Auswertung durchführt und mit der ersten Steuereinheit 430 kommuniziert. Die das übergeordnete System steuernde Steuereinheit 430 kann sodann Daten, die sie von der zweiten Steuereinheit 431 erhält, verwerten, um in Abhängigkeit hiervon beispielsweise ein Förderbandsystem 2 zu steuern. Die Steuereinheit 430 kann beispielsweise auch ein Verstellen der Warenweiche 42 auslösen, wobei die Steuerung des Bewegungsvorgangs der Warenweiche 42, also beispielsweise ein Ansteuern einer Antriebseinheit der Warenweiche 42, durch die zweite Steuereinheit 431 vorgenommen werden kann, an die die Warenweiche 42 angeschlossen ist.

Mit der ersten Steuereinheit 430 kann beispielsweise eine Scaneinrichtung 433, z.B. in Form eines Warenscanners 3 (siehe Fig. 1), verbunden sein, die wiederum auch mit der dritten Steuereinheit 432 kommuniziert. Beispielsweise kann auf diese Weise durch Zusammenwirken der Scaneinrichtung 433 mit den Sensoreinheiten 601-610 eine Überwachung vorgenommen werden. Wird beispielsweise festgestellt, dass ein Warenobjekt 7 in den Bereich einer Packmulde 40, 41 gelangt (was anhand einer Änderung des Füllstands in dieser Packmulde 40, 41 festgestellt werden kann), obwohl an der Scaneinrichtung 433 kein Warenobjekt 7 gescannt worden ist, kann dies auf einen Manipulationsversuch hindeuten.

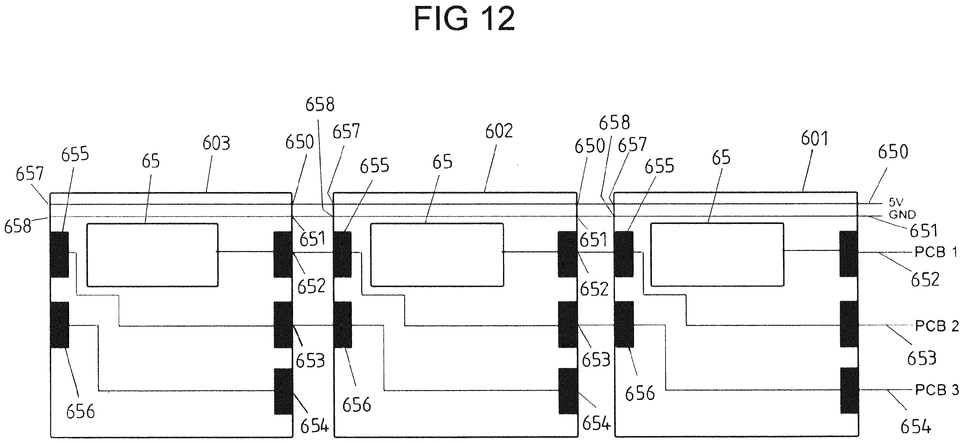

Fig. 12 zeigt ein Ausführungsbeispiel einer Verschaltung von unterschiedlichen Sensoreinheiten 601-603.

So können die Sensoreinheiten 601-603 jeweils eine Baugruppe 65 aufweisen, die die für die Sensorfunktion der Sensoreinheit 601-603 erforderlichen Bauteile, beispielsweise eine Sendeeinheit und/oder eine Empfangseinheit, umfasst. Die Sensoreinheiten 601-603 sind jeweils modular ausgestaltet und umfassen eingangsseitigen Anschlüsse 650-654 und ausgangsseitigen Anschlüsse 655-658.

Über die eingangsseitigen Anschlüsse 650, 651 kann eine Stromversorgung mit den Sensoreinheiten 601-603 verbunden werden, wobei die Sensoreinheiten 601-603 seriell verschaltet sind, sodass ausgangsseitige Anschlüsse 657, 658 einer Sensoreinheit 601, 602 an eingangsseitige Anschlüsse 650, 651 der nächsten Sensoreinheit 602, 603 angeschlossen sind, um eine Versorgungsspannung hin zu der nächsten Sensoreinheit 602, 603 zu übertragen.

Über die übrigen Anschlüsse kann eine Verschaltung der Sensorbaugruppen 65 der Sensoreinheiten 601-603 in kaskadierter Form erfolgen. So kann eine erste Sensorleitung, über die Signale hin zur und weg von der Sensorbaugruppe 65 der ersten Sensoreinheit 601 übertragen werden können, an einen eingangsseitigen Anschluss 652 der ersten Sensoreinheit 601 angeschlossen werden. Eine zweite Sensorleitung wird hingegen an einen Anschluss 653 der ersten Sensoreinheit 601 und eine dritte Sensorleitung an einen eingangsseitigen Anschluss 654 der ersten Sensoreinheit 601 angeschlossen.

Der eingangsseitige Anschluss 653 der ersten Sensoreinheit 601 ist mit dem ausgangsseitigen Anschluss 655 der ersten Sensoreinheit 601 verdrahtet, der wiederum mit dem eingangsseitigen Anschluss 652 der zweiten Sensoreinheiten 602 verbunden ist, sodass darüber die zweite Sensorleitung mit der Sensorbaugruppe 65 der zweiten Sensoreinheit 602 verbunden ist. Der eingangsseitige Anschluss 654 der ersten Sensoreinheit 601 ist demgegenüber mit dem ausgangsseitigen Anschluss 656 der ersten Sensoreinheit 601 verbunden, der wiederum mit dem eingangsseitigen Anschluss 653 der zweiten Sensoreinheit 602 verbunden ist. Dieser eingangsseitige Anschluss 653 der zweiten Sensoreinheit 602 ist mit dem ausgangsseitigen Anschluss 655 der zweiten Sensoreinheit 602 verdrahtet, der mit dem eingangsseitigen Anschluss 652 der dritten Sensoreinheit 603 verbunden ist, sodass die Baugruppe 65 der dritten Sensoreinheit 603 mit der dritten Sensorleitung verbunden ist.

Diese kaskadierte Form der Verschaltung ist grundsätzlich in beliebiger Weise skalierbar, wobei zur kaskadierten Verbindung von mehr als drei Sensoreinheiten 601-603 miteinander entsprechend mehr Anschlüsse an den einzelnen Sensoreinheiten 601-603 vorzusehen sind. Durch die kaskadierte Verschaltung wird eine Sternschaltung der in Fig. 11 prinzipiell dargestellten Art verwirklicht, wobei die Anzahl der zu verlegenden Kabel reduziert werden kann, weil Leitungen zusammengefasst werden können.

Der der Erfindung zugrunde liegende Gedanke ist nicht auf die vorangehend geschilderten Ausführungsbeispiele beschränkt, sondern lässt sich vielmehr auch in gänzlich anders gearteter Weise verwirklichen.

Grundsätzlich ist eine Füllstandserkennung in der hier beschriebenen Form nicht auf Warencheckout-Systeme beschränkt. Beispielsweise können auch bei Gebinderücknahmeautomaten, beispielsweise für Getränkebehälter, Packmulden vorhanden sein, in die hinein Gebinde gefördert werden und an denen eine Füllstandserkennung nach der hier beschriebenen Art vorgenommen werden kann.

Die Sensoren sind nicht notwendigerweise als Infrarotsender und/oder -empfänger ausgestaltet, sondern können auch anders geartet sein. Beispielseite können auch Ultraschallsensoren, kapazitive Sensoren induktive Sensoren, Drucksensoren, Kameras oder dergleichen zum Einsatz kommen.

### Bezugszeichenliste

- 1: Warencheckoutsystem
- 2: Fördersystem
- 20-24: Fördereinrichtung
- 3: Warenscanner
- 4: Packmuldensystem
- 40,41: Packmulde
- 400-403: Seite
- 42: Warentrenneinrichtung
- 420: Schwenkachse
- 43: Steuereinrichtung
- 430-432: Steuereinheiten
- 433: Scaneinrichtung
- 44: Antriebseinrichtung
- 5: Bezahlterminal
- 6: Sensoreinrichtung
- 601-610: Sensoreinheit
- 611-614: Sensoreinheit
- 62, 632-637: Reflexpunkt
- 64: Anzeigeeinrichtung
- 7: Objekt
- A1-A9: Schritte
- D: Schwenkrichtung
- F: Fördereinrichtung
- L, L', L1, L1', L2, L2': Lichtkegelkanzlei
- P: Pfad
- S, S': Sensorsignal
- S1-S6: Signalpfad

## Patentansprüche

1. Aufnahmesystem (4) zur Aufnahme von Objekten (7), mit
- zumindest einer Aufnahmeeinrichtung (40, 41) zum Empfangen von Objekten (7),
- einer Fördereinrichtung (2), die zumindest einen Förderbandabschnitt (20-24) zum Befördern von Objekten (7) in eine Förderrichtung (F) in die zumindest eine Aufnahmeeinrichtung (40, 41) aufweist, und
- einer an der zumindest einen Aufnahmeeinrichtung (40, 41) angeordneten Sensoreinrichtung (6) zum Erfassen von Objekten (7) in der zumindest einen Aufnahmeeinrichtung (40, 41),
**dadurch gekennzeichnet,**
**dass** die Sensoreinrichtung (6) ausgebildet ist, Sensorsignale (S, S') entlang unterschiedlicher Signalpfade (S1-S6) über die Aufnahmeeinrichtung (40, 41) zu senden, um anhand einer Interaktion zumindest eines der Sensorsignale (S, S') mit in die Aufnahmeeinrichtung (40, 41) geförderten Objekten (7) auf einen Füllstand der Aufnahmeeinrichtung (40, 41) zu schließen, wobei die Sensoreinrichtung (6)
- einen Sender zum Aussenden von Sensorsignalen (S, S') und eine Mehrzahl von Empfängern zum Empfangen der durch den Sender ausgesandten Sensorsignale (S, S') und/oder
- eine Mehrzahl von Sendern zum Aussenden von Sensorsignalen (S, S') und einen Empfänger zum Empfangen der durch die Sender ausgesandten Sensorsignale (S, S') aufweist,
und wobei Sender und Empfänger um die Aufnahmeeinrichtung herum verteilt sind, sodass die Aufnahmeeinrichtung (40, 41) mit den unterschiedlichen Signalpfaden überspannt wird.

2. Aufnahmesystem (4) nach Anspruch 1, **dadurch gekennzeichnet, dass** die Sensorsignale (S, S') durch Signale infraroten Lichts gebildet sind.

3. Aufnahmesystem (4) nach Anspruch 1 oder 2, **dadurch gekennzeichnet, dass** die zumindest eine Aufnahmeeinrichtung (40, 41) zumindest abschnittsweise durch Wandungsabschnitte (400-403) eingefasst ist, wobei Sensoreinheiten (601-610, 611-613) räumlich versetzt an unterschiedlichen Wandungsabschnitten (400-403) der zumindest einen Aufnahmeeinrichtung (40, 41) angeordnet sind.

4. Aufnahmesystem (4) nach einem der vorangehenden Ansprüche, **dadurch gekennzeichnet, dass** eine einen Sender ausbildende, erste Sensoreinheit (601-610, 611-613) an einem ersten Wandungsabschnitt (400-403) der zumindest einen Aufnahmeeinrichtung (40, 41) und eine einen Empfänger ausbildende, zweite Sensoreinheit (601-610, 611-613) der ersten Sensoreinheit (601-610, 611-613) gegenüberliegend an einem dem ersten Wandungsabschnitt (400-403) gegenüberliegenden, zweiten Wandungsabschnitt (400-403) angeordnet ist.

5. Aufnahmesystem (4) nach einem der vorangehenden Ansprüche, **dadurch gekennzeichnet, dass** zumindest eine Sensoreinheit (611-614) der Sensoreinrichtung (6) als Reflektionssensor zum Aussenden eines Sensorsignals (S, S') und zum Empfangen eines reflektierten Signals ausgebildet ist.

6. Aufnahmesystem (4) nach Anspruch 5, **dadurch gekennzeichnet, dass** die Sensoreinrichtung (611-614) ausgebildet ist, anhand eines empfangenen reflektierten Signals einen Abstandswert des zumindest einen Reflektionssensors zu einem reflektierenden Objekt zu bestimmen.

7. Aufnahmesystem (4) nach Anspruch 5 oder 6, **dadurch gekennzeichnet, dass** die als Reflektionssensor ausgebildete zumindest eine Sensoreinheit (611-614) ausgebildet ist, durch Vergleich eines Signalpegels eines empfangenen reflektierten Signals mit unterschiedlichen Schwellwerten zu bestimmen, ob das reflektierte Signal durch ein Objekt in einem Nahbereich der Sensoreinheit (611-614) oder in einem Fernbereich der Sensoreinheit (611-614) reflektiert worden ist.

8. Aufnahmesystem (4) nach einem der vorangehenden Ansprüche, **dadurch gekennzeichnet, dass** zumindest eine Sensoreinheit (611-614) der Sensoreinrichtung (6) als Reflektionssensor zum Aussenden eines Sensorsignals (S, S') und zum Empfangen eines reflektierten Signals und zudem zum Empfangen eines ausgesendeten Signals einer anderen Sensoreinrichtung (611-614) ausgebildet ist.

9. Aufnahmesystem (4) nach einem der vorangehenden Ansprüche, **dadurch gekennzeichnet, dass** das Aufnahmesystem (4) eine Steuereinrichtung (43) zum Auswerten von anhand der Sensorsignale (S, S') erhaltenen Sensordaten aufweist, um anhand der Sensordaten auf den Füllstand der Aufnahmeeinrichtung (40, 41) zu schließen.

10. Aufnahmesystem (4) nach Anspruch 9, **dadurch gekennzeichnet, dass** die Steuereinrichtung (43) ausgebildet ist, in Abhängigkeit von einem ermittelten Füllstand die Fördergeschwindigkeit zumindest eines Förderbandabschnitts (20-24) der Fördereinrichtung (2) zu steuern.

11. Aufnahmesystem (4) nach Anspruch 9 oder 10, **dadurch gekennzeichnet, dass** das Aufnahmesystem (4) eine an der Fördereinrichtung (2) angeordnete Objekttrenneinrichtung (42) aufweist, die zum Leiten von Objekten in unterschiedliche Aufnahmeeinrichtungen (40, 41) verstellbar ist, wobei die Steuereinrichtung (43) ausgebildet ist, in Abhängigkeit von einem ermittelten Füllstand eine Antriebseinrichtung (44) zum Verstellen der Objekttrenneinrichtung (42) anzusteuern.

12. Aufnahmesystem (4) nach einem der vorangehenden Ansprüche, **dadurch gekennzeichnet, dass** Sensoreinheiten (601-610, 611-614) der Sensoreinrichtung (6) jeweils eine Anzeigeeinrichtung (64) zum Ausgeben visueller Anzeigesignale in Abhängigkeit von einem Füllstand der Aufnahmeeinrichtung (40, 41) aufweisen.

13. Aufnahmesystem (4) nach einem der vorangehenden Ansprüche, **dadurch gekennzeichnet, dass** eine als Sender ausgebildete Sensoreinheit (601-610, 611-614) der Sensoreinrichtung (6) ausgebildet ist, ein eine Identifizierungskennung enthaltendes, als Testsignal dienendes Sensorsignal (S, S') zum gegenseitigen Identifizieren an zumindest eine als Empfänger ausgebildete, andere Sensoreinheit (601-610, 611-614) zu senden.

14. Aufnahmesystem (4) nach Anspruch 13, **dadurch gekennzeichnet, dass** die Sensoreinrichtung (6) ausgebildet ist, das an der als Empfänger ausgebildeten Sensoreinheit (601-610, 611-614) empfangene Testsignal auszuwerten und den Signalpegel des Testsignals mit einem gespeicherten Referenzwert zu vergleichen, um anhand des Vergleichs auf eine Veränderung an der Sensoreinrichtung (6) zu schließen.

15. Warencheckout-System (1) oder Pfandrücknahmesystem mit einem Aufnahmesystem nach einem der vorangehenden Ansprüche.

16. Verfahren zum Betreiben eines Aufnahmesystems (4) zum Aufnehmen von Objekten, bei dem
- zumindest eine Aufnahmeeinrichtung (40, 41) Objekte (7) empfängt, indem eine Fördereinrichtung (2) mit zumindest einem Förderbandabschnitt (20-24) Objekte (7) in eine Förderrichtung (F) in die zumindest eine Aufnahmeeinrichtung (40, 41) befördert, und
- eine an der zumindest einen Aufnahmeeinrichtung (40, 41) angeordnete Sensoreinrichtung (6) Objekte (7) in der zumindest einen Aufnahmeeinrichtung (40, 41) erfasst,
**dadurch gekennzeichnet,**
**dass** die Sensoreinrichtung (6) Sensorsignale (S, S') entlang unterschiedlicher Signalpfade über die Aufnahmeeinrichtung (40, 41) sendet, um anhand einer Interaktion zumindest eines der Sensorsignale (S, S') mit in die Aufnahmeeinrichtung (40, 41) geförderten Objekten (7) auf einen Füllstand der Aufnahmeeinrichtung (40, 41) zu schließen, wobei die Sensoreinrichtung (6)
- einen Sender zum Aussenden von Sensorsignalen (S, S') und eine Mehrzahl von Empfängern zum Empfangen der durch den Sender ausgesandten Sensorsignale (S, S') und/oder
- eine Mehrzahl von Sendern zum Aussenden von Sensorsignalen (S, S') und einen Empfänger zum Empfangen der durch die Sender ausgesandten Sensorsignale (S, S') aufweist,
und wobei Sender und Empfänger um die Aufnahmeeinrichtung herum verteilt sind, sodass die Aufnahmeeinrichtung (40, 41) mit den unterschiedlichen Signalpfaden überspannt wird.

## Claims

1. Reception system (4) for receiving objects (7), comprising
- at least one reception device (40, 41) for receiving objects (7),
- a conveyor device (2), which has at least one conveyor belt section (20-24) for conveying objects (7) in a conveyance direction (F) into the at least one reception device (40, 41), and
- a sensor device (6), which is arranged on the at least one reception device (40, 41), for detecting objects (7) in the at least one reception device (40, 41),
**characterized in that**
the sensor device (6) is designed to emit sensor signals (S, S') along different signal paths (S1-S6) over the reception device (40, 41), to conclude a fill level of the reception device (40, 41) on the basis of an interaction of at least one of the sensor signals (S, S') with objects (7) conveyed into the reception device (40, 41), wherein the sensor device (6) has
- one emitter for emitting sensor signals (S, S') and a plurality of receivers for receiving the sensor signals (S, S') emitted by the emitter and/or
- a plurality of emitters for emitting sensor signals (S, S') and one receiver for receiving the sensor signals (S, S') emitted by the emitters,
and wherein the emitter(s) and receiver(s) are distributed around the reception device, such that the reception device (40, 41) is crossed by the various signal paths.

2. Reception system (4) according to Claim 1, **characterized in that** the sensor signals (S, S') are formed by signals of infrared light.

3. Reception system (4) according to Claim 1 or 2, **characterized in that** the at least one reception device (40, 41) is bordered at least in sections by wall sections (400-403), wherein sensor units (601-610, 611-613) are arranged spatially offset on different wall sections (400-403) of the at least one reception device (40, 41).

4. Reception system (4) according to one of the preceding claims, **characterized in that** a first sensor unit (601-610, 611-613), which forms an emitter, is arranged on a first wall section (400-403) of the at least one reception device (40, 41) and a second sensor unit (601-610, 611-613), which forms a receiver, is arranged opposite to the first sensor unit (601-610, 611-613) on a second wall section (400-403) opposite to the first wall section (400-403).

5. Reception system (4) according to one of the preceding claims, **characterized in that** at least one sensor unit (611-614) of the sensor device (6) is designed as a reflection sensor for emitting a sensor signal (S, S') and for receiving a reflected signal.

6. Reception system (4) according to Claim 5, **characterized in that** the sensor device (611-614) is designed to determine a distance value of the at least one reflection sensor to a reflected object on the basis of a received reflected signal.

7. Reception system (4) according to Claim 5 or 6, **characterized in that** the at least one sensor unit (611-614) designed as a reflection sensor is designed to determine, by comparison of a signal level of a received reflected signal with different threshold values, whether the reflected signal has been reflected by an object at short range to the sensor unit (611-614) or at long range to the sensor unit (611-614) .

8. Reception system (4) according to one of the preceding claims, **characterized in that** at least one sensor unit (611-614) of the sensor device (6) is designed as a reflection sensor for emitting a sensor signal (S, S') and for receiving a reflected signal and additionally for receiving an emitted signal of another sensor device (611-614).

9. Reception system (4) according to one of the preceding claims, **characterized in that** the reception system (4) has a control device (43) for analyzing sensor data obtained on the basis of the sensor signals (S, S'), to conclude the fill level of the reception device (40, 41) on the basis of the sensor data.

10. Reception system (4) according to Claim 9, **characterized in that** the control device (43) is designed to control the conveyance speed of at least one conveyor belt section (20-24) of the conveyor device (2) as a function of an ascertained fill level.

11. Reception system (4) according to Claim 9 or 10, **characterized in that** the reception system (4) has an object separation device (42) arranged on the conveyor device (2), which is adjustable to guide objects into different reception devices (40, 41), wherein the control device (43) is designed to activate a drive device (44) to adjust the object separation device (42) as a function of an ascertained fill level.

12. Reception system (4) according to one of the preceding claims, **characterized in that** sensor units (601-610, 611-614) of the sensor device (6) each have a display device (64) for outputting visual display signals as a function of a fill level of the reception device (40, 41).

13. Reception system (4) according to one of the preceding claims, **characterized in that** a sensor unit (601-610, 611-614), which is designed as an emitter, of the sensor device (6) is designed to emit a sensor signal (S, S'), which contains an identification identifier and is used as a test signal, for mutual identification, to at least one other sensor unit (601-610, 611-614) designed as a receiver.

14. Reception system (4) according to Claim 13, **characterized in that** the sensor unit (6) is designed to analyze the test signal received at the sensor unit (601-610, 611-614) designed as a receiver and to compare the signal level of the test signal to a stored reference value, to conclude a change at the sensor device (6) on the basis of the comparison.

15. Product checkout system (1) or reverse vending machine having a reception system according to one of the preceding claims.

16. Method for operating a reception system (4) for receiving objects, in which
- at least one reception device (40, 41) receives objects (7), in that a conveyor device (2) having at least one conveyor belt section (20-24) conveys objects (7) in a conveyance direction (F) into the at least one reception device (40, 41), and
- a sensor device (6) arranged on the at least one reception device (40, 41) detects objects (7) in the at least one reception device (40, 41),
**characterized in that**
the sensor device (6) emits sensor signals (S, S') along different signal paths over the reception device (40, 41), to conclude a fill level of the reception device (40, 41) on the basis of an interaction of at least one of the sensor signals (S, S') with objects (7) conveyed into the reception device (40, 41), wherein the sensor device (6) has
- one emitter for emitting sensor signals (S, S') and a plurality of receivers for receiving the sensor signals (S, S') emitted by the emitter and/or
- a plurality of emitters for emitting sensor signals (S, S') and one receiver for receiving the sensor signals (S, S') emitted by the emitters,
and wherein the emitter(s) and receiver(s) are distributed around the reception device, such that the reception device (40, 41) is crossed by the various signal paths.

## Revendications

1. Système de réception (4) destiné à recevoir des objets (7), comprenant
- au moins un dispositif de réception (40, 41) destiné à recevoir des objets (7),
- un dispositif de transport (2) qui comporte au moins une partie formant bande transporteuse (20-24) destinée à transporter des objets (7) dans une direction de transport (F) dans ledit au moins un dispositif de réception (40, 41), et
- un dispositif capteur (6) disposé sur ledit au moins un dispositif de réception (40, 41) et destiné à détecter des objets (7) dans ledit au moins un dispositif de réception (40, 41),
**caractérisé en ce que**
le dispositif capteur (6) est conçu pour émettre des signaux de capteurs (S, S') suivant différents trajets de signaux (S1-S6) par l'intermédiaire du dispositif de réception (40, 41) afin de déduire un niveau de remplissage du dispositif de réception (40, 41) sur la base d'une interaction d'au moins l'un des signaux de capteurs (S, S') avec des objets (7) transportés dans le dispositif de réception (40, 41), dans lequel le dispositif capteur (6) comporte
- un émetteur destiné à émettre des signaux de capteurs (S, S') et plusieurs récepteurs destinés à recevoir les signaux de capteurs (S, S') émis par l'émetteur et/ou
- une pluralité d'émetteurs destinés à émettre des signaux de capteurs (S, S') et un récepteur destiné à recevoir les signaux de capteurs (S, S') émis par les émetteurs,
et dans lequel les émetteurs et les récepteurs sont répartis autour du dispositif de réception de manière à ce que le dispositif de réception (40, 41) soit couvert par les différents trajets de signaux.

2. Système de réception (4) selon la revendication 1, **caractérisé en ce que** les signaux de capteurs (S, S') sont constitués par des signaux de lumière infrarouge.

3. Système de réception (4) selon la revendication 1 ou 2, **caractérisé en ce que** ledit au moins un dispositif de réception (40, 41) est entouré au moins par sections par des parties de parois (400-403), dans lequel il est prévu des unités à capteurs (601-610, 611-613) disposées de manière décalée dans l'espace sur différentes parties de parois (400-403) dudit au moins un dispositif de réception (40, 41).

4. Système de réception (4) selon l'une des revendications précédentes, **caractérisé en ce qu'**une première unité à capteur (601-610, 611-613) constituant un émetteur est disposée sur une première partie de paroi (400-403) dudit au moins un dispositif de réception (40, 41) et une deuxième unité à capteur (601-610, 611-613) constituant un récepteur est disposée en face de la première unité à capteur (601-610, 611-613) sur une deuxième partie de paroi (400-403) opposée à la première partie de paroi (400-403).

5. Système de réception (4) selon l'une des revendications précédentes, **caractérisé en ce qu'**au moins une unité à capteur (611-614) du dispositif capteur (6) est conçue sous la forme d'un capteur de réflexion destiné à émettre un signal de capteur (S, S') et à recevoir un signal réfléchi.

6. Système de réception (4) selon la revendication 5, **caractérisé en ce que** le dispositif capteur (611-614) est conçu pour déterminer sur la base d'un signal réfléchi reçu une valeur de distance dudit au moins un capteur de réflexion par rapport à un objet réfléchissant.

7. Système de réception (4) selon la revendication 5 ou 6, **caractérisé en ce que** ladite au moins une unité à capteur (611-614) est conçue sous la forme d'un capteur de réflexion destiné à déterminer, par comparaison d'un niveau de signal d'un signal réfléchi reçu avec différentes valeurs de seuil, si le signal réfléchi a été réfléchi par un objet situé dans une zone proche de l'unité à capteur (611-614) ou dans une zone éloignée de l'unité à capteur (611-614).

8. Système de réception (4) selon l'une des revendications précédentes, **caractérisé en ce qu'**au moins une unité à capteur (611-614) du dispositif capteur (6) est conçue sous la forme d'un capteur de réflexion destiné à émettre un signal de détection (S, S') et à recevoir un signal réfléchi ainsi qu'à recevoir un signal émis d'un autre dispositif capteur (611-614).

9. Système de réception (4) selon l'une des revendications précédentes, **caractérisé en ce que** le système de réception (4) comporte un dispositif de commande (43) destiné à évaluer des données de capteurs obtenues sur la base des signaux de capteurs (S, S') afin de déduire sur la base des données de capteurs le niveau de remplissage du dispositif de réception (40, 41).

10. Système de réception (4) selon la revendication 9, **caractérisé en ce que** le dispositif de commande (43) est conçu pour commander la vitesse de transport d'au moins une partie formant bande transporteuse (20-24) du dispositif de transport (2) en fonction d'un niveau de remplissage déterminé.

11. Système de réception (4) selon la revendication 9 ou 10, **caractérisé en ce que** le système de réception (4) comporte un dispositif de séparation d'objets (42) disposé sur le dispositif de transport (2), qui est réglable pour guider des objets vers différents dispositifs de réception (40, 41), dans lequel le dispositif de commande (43) est conçu pour commander un dispositif d'entraînement (44) destiné à régler le dispositif de séparation d'objets (42) en fonction d'un niveau de remplissage déterminé.

12. Système de réception (4) selon l'une des revendications précédentes, **caractérisé en ce que** des unités à capteurs (601-610, 611-614) du dispositif capteur (6) comportent respectivement un dispositif d'affichage (64) destiné à délivrer des signaux d'affichage visuels en fonction d'un niveau de remplissage du dispositif de réception (40, 41).

13. Système de réception (4) selon l'une des revendications précédentes, **caractérisé en ce qu'**une unité à capteur (601-610, 611-614) du dispositif capteur (6), qui est conçue sous la forme d'un émetteur, est conçue pour émettre un signal de capteur (S, S'), qui contient un code d'identification et sert de signal de test, à des fins d'identification mutuelle, à au moins une autre unité à capteur (601-610, 611-614) conçue sous la forme d'un récepteur.

14. Système de réception (4) selon la revendication 13, **caractérisé en ce que** le dispositif capteur (6) est conçu pour évaluer le signal de test reçu au niveau de l'unité à capteur (601-610, 611-614) conçue sous la forme d'un récepteur et pour comparer le niveau de signal du signal de test avec une valeur de référence mémorisée, afin de déduire sur la base de la comparaison qu'il se produit une modification au niveau du dispositif capteur (6).

15. Système de caisse de marchandises (1) ou système de reprise d'articles consignés comprenant un système de réception selon l'une des revendications précédentes.

16. Procédé de fonctionnement d'un système de réception (4) destiné à recevoir des objets, dans lequel
- au moins un dispositif de réception (40, 41) reçoit des objets (7), en faisant en sorte qu'un dispositif de transport (2) comprenant au moins une partie formant bande transporteuse (20-24) transporte des objets (7) dans une direction de transport (F) dans ledit au moins un dispositif de réception (40, 41), et
- un dispositif capteur (6) disposé sur ledit au moins un dispositif de réception (40, 41) détecte des objets (7) dans ledit au moins un dispositif de réception (40, 41),
**caractérisé en ce que**
le dispositif capteur (6) émet des signaux de capteurs (S, S') suivant différents trajets de signaux par l'intermédiaire du dispositif de réception (40, 41) afin de déduire un niveau de remplissage du dispositif de réception (40, 41) sur la base d'une interaction d'au moins l'un des signaux de capteurs (S, S') avec des objets (7) transportés dans le dispositif de réception (40, 41), dans lequel le dispositif capteur (6) comporte
- un émetteur destiné à émettre des signaux de capteurs (S, S') et une pluralité de récepteurs destinés à recevoir les signaux de capteurs (S, S') émis par l'émetteur et/ou
- une pluralité d'émetteurs destinés à émettre des signaux de capteurs (S, S') et un récepteur destiné à recevoir les signaux de capteurs (S, S') émis par les émetteurs,
et dans lequel les émetteurs et les récepteurs sont répartis autour du dispositif de réception de manière à ce que le dispositif de réception (40, 41) soit couvert par les différents trajets de signaux.
